# EUROPEAN PATENT APPLICATION

(11) **EP 4 400 897 A1**
(43) Date of publication of application: **17.07.2024**
(21) Application number: 21956865.6
(22) Date of filing: 07.09.2021
(51) Int. Cl.: G02B 30/56

(54) **DISPLAY DEVICE**

(71) Applicant: LG Electronics Inc., Yeongdeungpo-gu Seoul 07336 (KR)
(72) Inventor: MOK, Jinmyoung, Seoul 06772 (KR); CHOI, Dongjune, Seoul 06772 (KR); RYU, Hyungsuk, Seoul 06772 (KR); CHOI, Seungyul, Seoul 06772 (KR)
(74) Representative: Schornack, Oliver
(86) International application number: PCT/KR2021/012105
(87) International publication number: WO 2023/038160

(57) **Abstract**

A display device is disclosed. A display device according to one embodiment of the present disclosure includes: a case in which an opening is formed; a first optical mirror disposed in a first side of the case; and a second optical mirror disposed in a second side of the case and located below the first optical mirror, wherein a curved surface is formed on the first optical mirror, and a residual, which is a difference between the curved surface of the first optical mirror and a parabolic surface, is asymmetric at both ends of the first optical mirror. Accordingly, it is possible to provide a display device capable of improving a viewing angle for displaying a floating image.

## Description

### BACKGROUND

### 1. Technical Field

. The present disclosure relates to a display device, and more particularly, to a display device capable of improving a viewing angle for displaying a floating image.

### 2. Description of the Related Art

. A floating display device is a device that displays a floating image using an optical mirror.

. Korean Registered Patent Publication No. 10-0219602 (hereinafter referred to as "Patent Document 1"), which is hereby incorporated by reference, discloses a stereoscopic image display switch that displays a floating image using a reflector.

. However, in the case of Patent Document 1, since the reflector has a symmetrical parabolic optical surface, it causes a decrease in viewing angle and an increase in volume.

. Korean Registered Patent Publication No. 10-0697343 (hereinafter referred to as "Patent Document 2"), which is hereby incorporated by reference, discloses a multi-view projection device that displays a floating image using two concave mirrors, and an image reproduction apparatus using the same.

. However, in the case of Patent Document 2, since the two concave mirrors have a symmetrical parabolic optical surface, it causes a decrease in viewing angle and an increase in volume. In particular, it is disadvantageous in that the size of the internal concave mirror has to be increased.

. Meanwhile, as the size of a concave mirror increases, it is more likely to have different magnifications in the upper and lower parts of a floating image, or to cause distortion.

### SUMMARY

. It is an objective of the present disclosure to provide a display device capable of improving a viewing angle for displaying a floating image.

. It is another objective of the present disclosure to provide a display device capable of achieving a size reduction for displaying a floating image.

. It is yet another objective of the present disclosure to provide a display device capable of increasing the size of a floating image.

. It is yet another objective of the present disclosure to provide a display device capable of increasing the size of a floating image by using a freeform optical mirror.

. According to one aspect of the subject matter described in this application, a display device includes: a case in which an opening is formed; a first optical mirror disposed in a first side of the case; and a second optical mirror disposed in a second side of the case and located below the first optical mirror, wherein a curved surface is formed on the first optical mirror, and a residual, which is a difference between the curved surface of the first optical mirror and a parabolic surface, is asymmetric at both ends of the first optical mirror.

. The residual may increase from a center of the residual, at which the difference between the curved surface of the first optical mirror and the parabolic surface is lowest, to the both ends of the first optical mirror, and, of the both ends, a residual at a second end may be greater than a residual at a first end.

. Of the both ends of the first optical mirror, a residual at a second end farther away from the opening may be greater than a residual at a first end closer to the opening.

. A ratio of a first distance between a center of the residual at which the difference between the curved surface of the first optical mirror and the parabolic surface is lowest and a first end of the first optical mirror to a distance between the first end and a second end of the first optical mirror may be 0.5 to 0.65.

. The curved surface of the first optical mirror may be flat relative to the parabolic surface.

. The second optical mirror may be provided with a curved surface. A second residual, which is a difference between the curved surface of the second optical mirror and a second parabolic surface, may be asymmetric at both ends of the second optical mirror.

. The second residual may increase from a center of the second residual, at which the difference between the curved surface of the second optical mirror and the second parabolic surface is lowest, to the both ends of the second optical mirror, and, of the both ends, a residual at a fourth end may be greater than a residual at a third end.

. Of the both ends of the second optical mirror, a residual at a fourth end farther away from the opening may be greater than a residual at a third end closer to the opening.

. A ratio of a first distance between a center of the second residual at which the difference between the curved surface of the second optical mirror and the second parabolic surface is lowest and a third end of the second optical mirror to a distance between the third end and a fourth end of the second optical mirror may be 0.5 to 0.65.

. The curved surface of the second optical mirror may be concave relative to the parabolic surface.

. An absolute value of a ratio of a curvature of the first optical mirror to a curvature of the second optical mirror may be 0.75 to 1.25.

. The curved surface of the first optical mirror may have a plurality of curvatures.

. The curved surface of the second optical mirror may have a plurality of curvatures.

. A distance between the first optical mirror and the opening may be less than a distance between the second optical mirror and the opening.

. The first optical mirror may be disposed to face an object placed in the case. A distance between the second optical mirror and the object may be less than a distance between the first optical mirror and the object.

. Light from the object may be reflected by the first optical mirror, and light from the first optical mirror may be reflected by the second optical mirror to thereby pass through the opening.

. According to another aspect, a display device includes: a case in which an opening is formed; a first optical mirror disposed in a first side of the case; and a second optical mirror disposed in a second side of the case and located below the first optical mirror, wherein a curved surface is formed on the second optical mirror, and a second residual, which is a difference between the curved surface of the second optical mirror and a second parabolic surface, is asymmetric at both ends of the second optical mirror.

### EFFECT OF THE DISCLOSURE

. A display device according to one embodiment of the present disclosure includes: a case in which an opening is formed; a first optical mirror disposed in a first side of the case; and a second optical mirror disposed in a second side of the case and located below the first optical mirror, wherein a curved surface is formed on the first optical mirror, and a residual, which is a difference between the curved surface of the first optical mirror and a parabolic surface, is asymmetric at both ends of the first optical mirror. Accordingly, it is possible to improve the viewing angle when displaying a floating image. In addition, it is possible to reduce the display device in size.

. Further, it is possible to increase a floating image in size. In particular, the size of the floating image can be increased by using a freeform optical mirror.

. Meanwhile, the residual may increase from a center of the residual, at which the difference between the curved surface of the first optical mirror and the parabolic surface is lowest, to the both ends of the first optical mirror, and a residual at a second end of the of the both ends may be greater than a residual at a first end of the both ends. Accordingly, it is possible to improve the viewing angle when displaying a floating image. In addition, it is possible to reduce the display device in size.

. Meanwhile, it is preferable that, of the both ends of the first optical mirror, a residual at a second end farther away from the opening is greater than a residual at a first end closer to the opening. Accordingly, it is possible to improve the viewing angle when displaying a floating image. In addition, it is possible to reduce the display device in size.

. Meanwhile, it is preferable that a ratio of a first distance between a center of the residual at which the difference between the curved surface of the first optical mirror and the parabolic surface is lowest and a first end of the first optical mirror to a distance between the first end and a second end of the first optical mirror is 0.5 to 0.65. Accordingly, it is possible to improve the viewing angle when displaying a floating image. In addition, it is possible to reduce the display device in size.

. Meanwhile, the curved surface of the first optical mirror may be flat relative to the parabolic surface. Accordingly, it is possible to improve the viewing angle when displaying a floating image. In addition, it is possible to reduce the display device in size.

. Meanwhile, a curved surface is formed on the second optical mirror. A second residual, which is a difference between the curved surface of the second optical mirror and a second parabolic surface, is asymmetric at both ends of the second optical mirror. Accordingly, it is possible to improve the viewing angle when displaying a floating image. In addition, it is possible to reduce the display device in size.

. Meanwhile, it is preferable that the second residual increases from a center of the second residual, at which the difference between the curved surface of the second optical mirror and the second parabolic surface is lowest, to the both ends of the second optical mirror, and a residual at a fourth end of the both ends is greater than a residual at a third end of the both ends. Accordingly, it is possible to improve the viewing angle when displaying a floating image. In addition, it is possible to reduce the display device in size.

. Meanwhile, it is preferable that, of the both ends of the second optical mirror, a residual at a fourth end farther away from the opening is greater than a residual at a third end closer to the opening. Accordingly, it is possible to improve the viewing angle when displaying a floating image. In addition, it is possible to reduce the display device in size.

. Meanwhile, it is preferable that a ratio of a first distance between a center of the second residual at which the difference between the curved surface of the second optical mirror and the second parabolic surface is lowest and a third end of the second optical mirror to a distance between the third end and a fourth end of the second optical mirror is 0.5 to 0.65. Accordingly, it is possible to improve the viewing angle when displaying a floating image. In addition, it is possible to reduce the display device in size.

. Meanwhile, the second parabolic surface may be concave relative to the parabolic surface. Accordingly, it is possible to improve the viewing angle when displaying a floating image. In addition, it is possible to reduce the display device in size.

. Meanwhile, it is preferable that an absolute value of a ratio of a curvature of the first optical mirror to a curvature of the second optical mirror is 0.75 to 1.25. Accordingly, it is possible to improve the viewing angle when displaying a floating image. In addition, it is possible to reduce the display device in size.

. Meanwhile, it is preferable that the curved surface of the first optical mirror has a plurality of curvatures. Accordingly, it is possible to improve the viewing angle when displaying a floating image. In addition, it is possible to reduce the display device in size.

. Meanwhile, it is preferable that the curved surface of the second optical mirror has a plurality of curvatures. Accordingly, it is possible to improve the viewing angle when displaying a floating image. In addition, it is possible to reduce the display device in size.

. Meanwhile, it is preferable that a distance between the first optical mirror and the opening is less than a distance between the second optical mirror and the opening. Accordingly, it is possible to improve the viewing angle when displaying a floating image. In addition, it is possible to reduce the display device in size.

. Meanwhile, the first optical mirror is disposed to face an object placed in the case, and a distance between the second optical mirror and the object is preferably less than a distance between the first optical mirror and the object. Accordingly, it is possible to improve the viewing angle when displaying a floating image. In addition, it is possible to reduce the display device in size.

. Meanwhile, light from the object is reflected by the first optical mirror, and light from the first optical mirror is reflected by the second optical mirror to thereby pass through the opening. Accordingly, it is possible to improve the viewing angle when displaying a floating image. In addition, it is possible to reduce the display device in size.

. A display device according to another embodiment of the present disclosure includes: a case in which an opening is formed; a first optical mirror disposed in a first side of the case; and a second optical mirror disposed in a second side of the case and located below the first optical mirror, wherein a curved surface is formed on the second optical mirror, and a second residual, which is a difference between the curved surface of the second optical mirror and a second parabolic surface, is asymmetric at both ends of the second optical mirror. Accordingly, it is possible to improve the viewing angle when displaying a floating image. In addition, it is possible to reduce the display device in size. Further, it is possible to increase a floating image in size. In particular, the size of the floating image can be increased by using a freeform optical mirror.

### BRIEF DESCRIPTION OF THE DRAWINGS

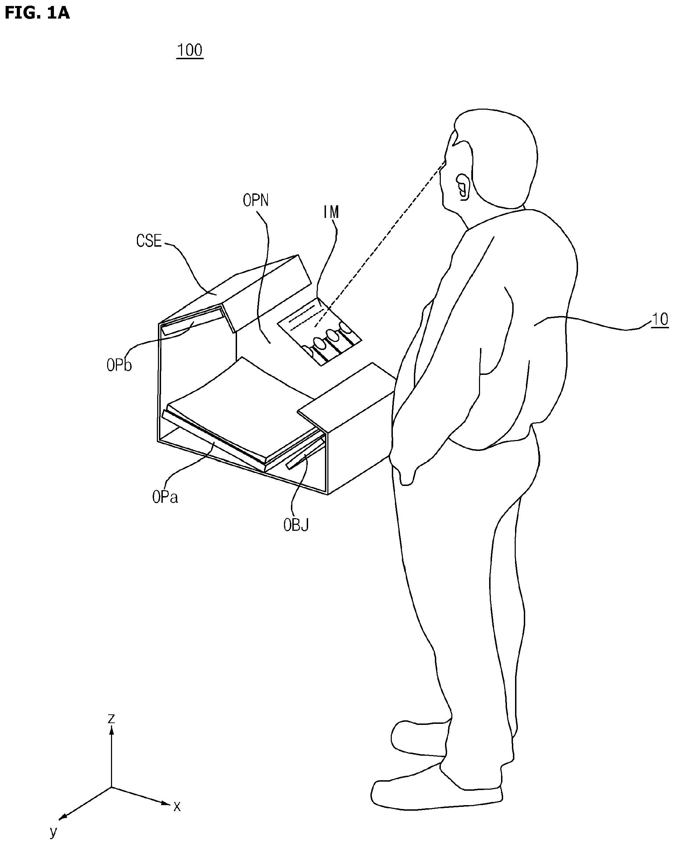

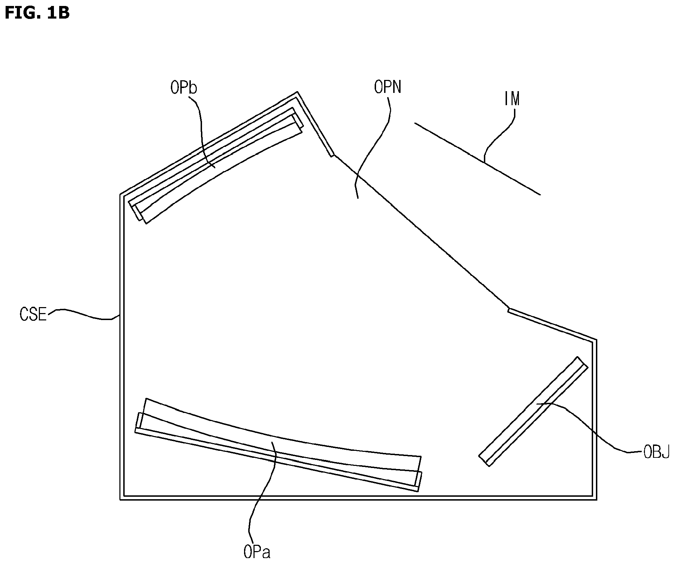

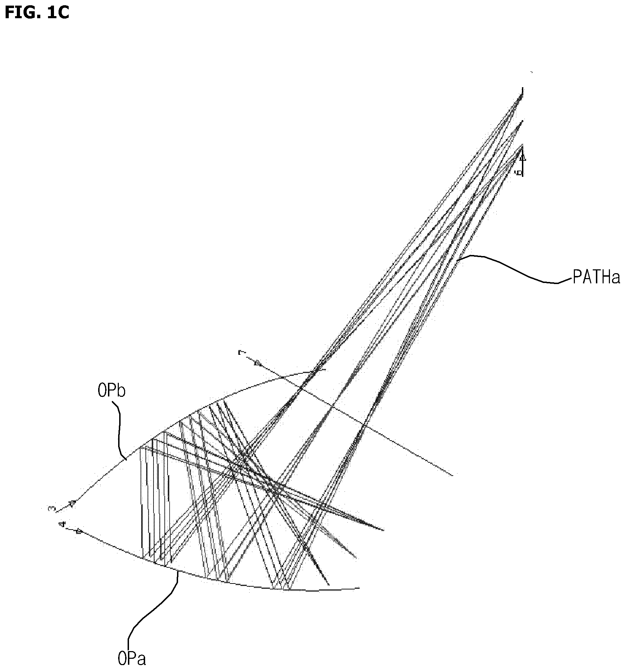

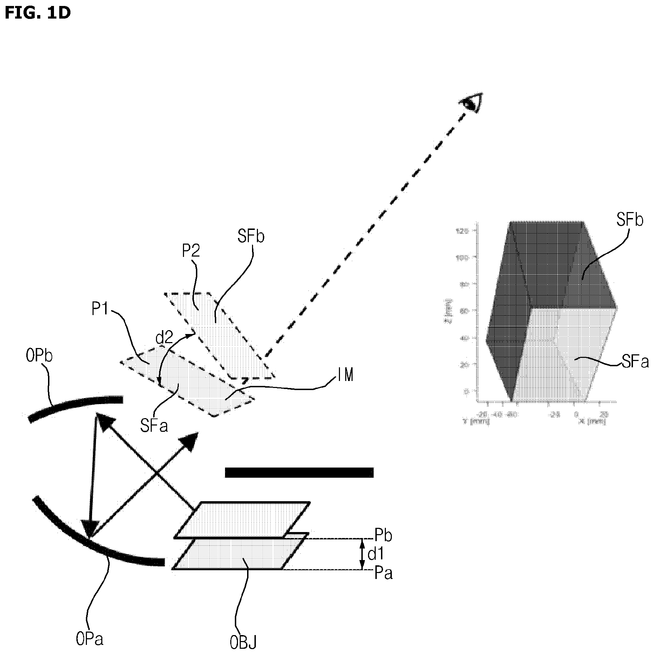

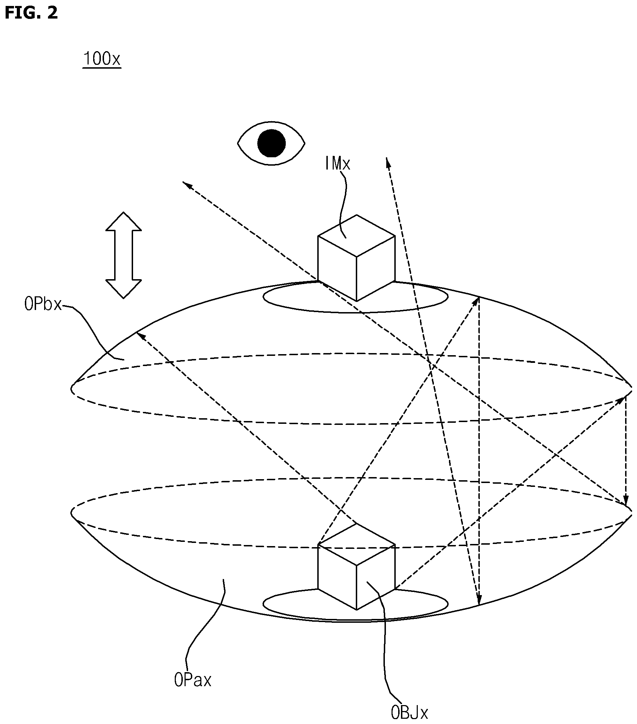

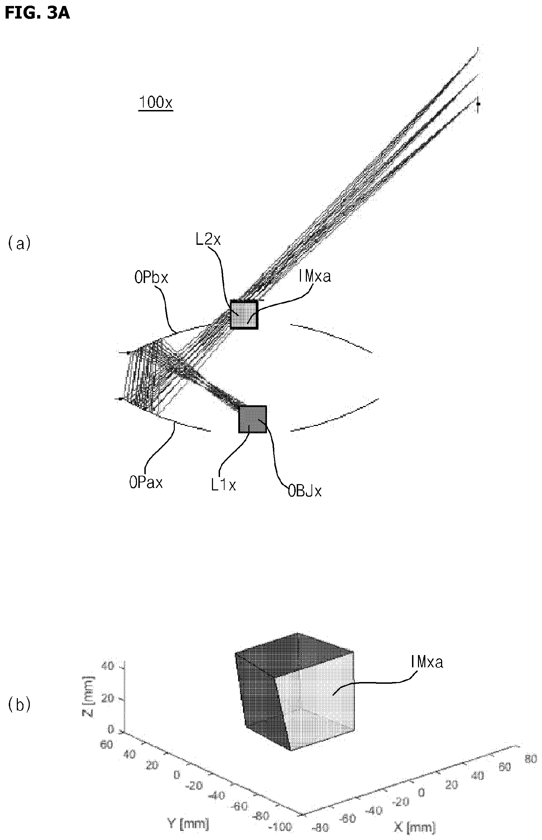

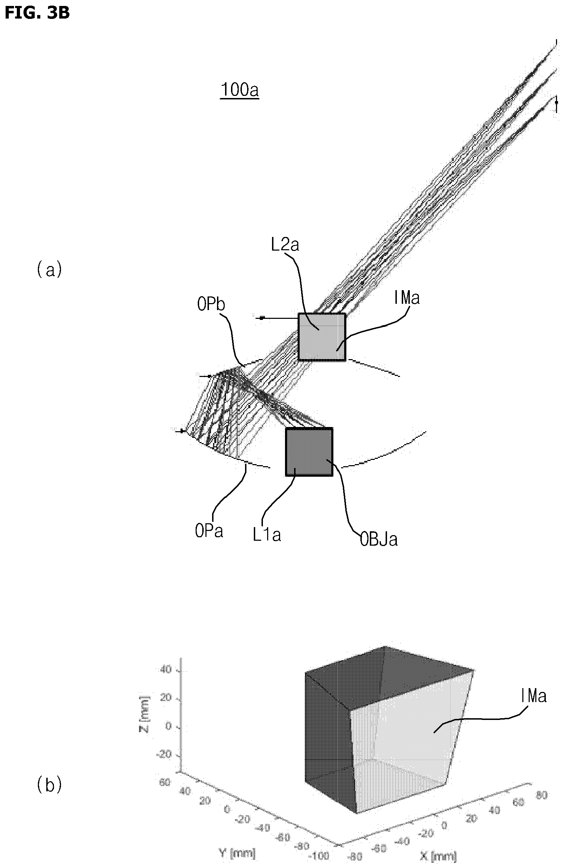

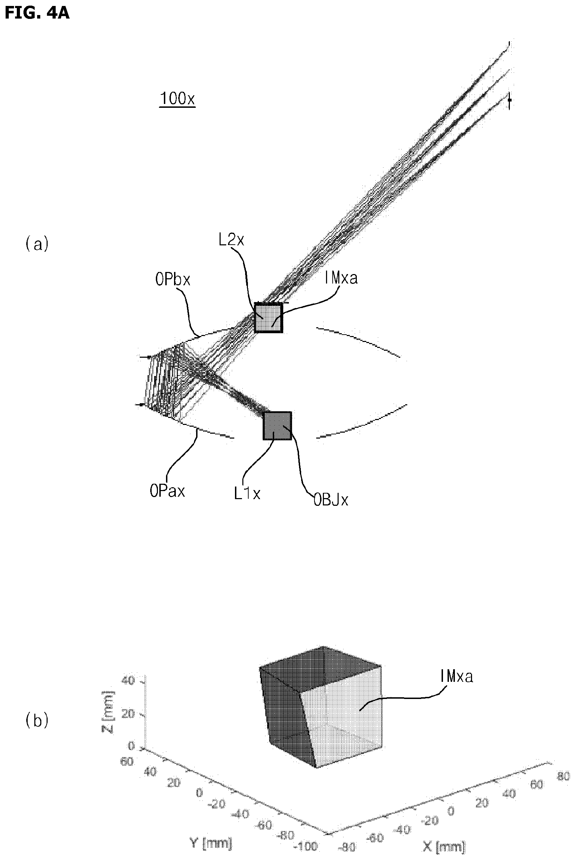

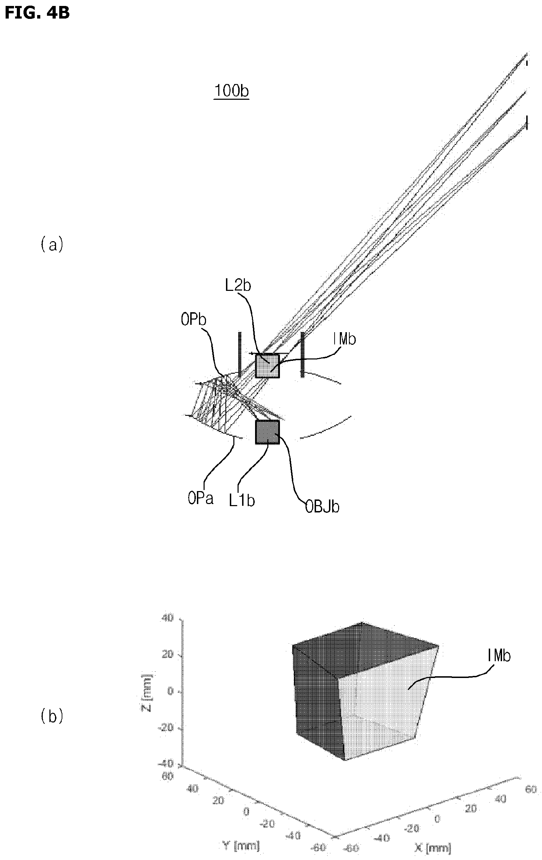

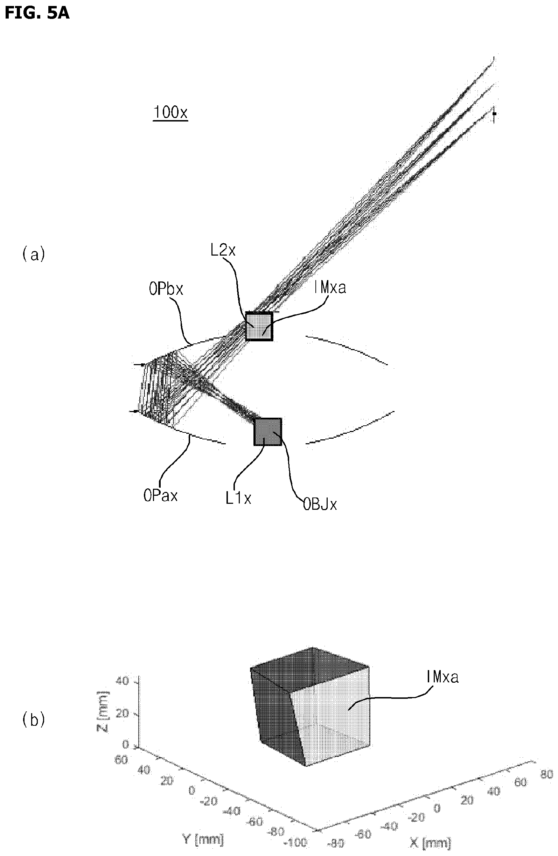

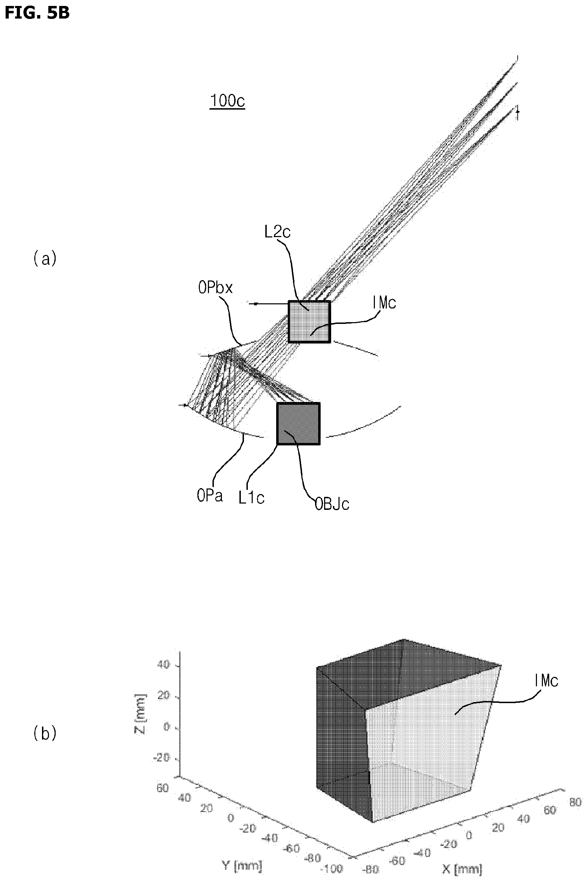

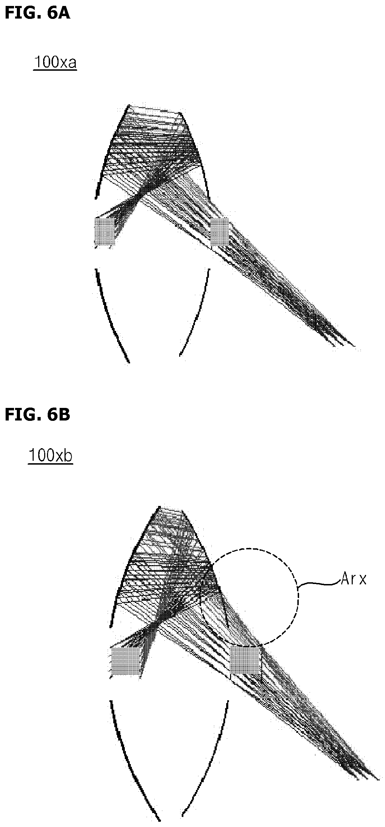

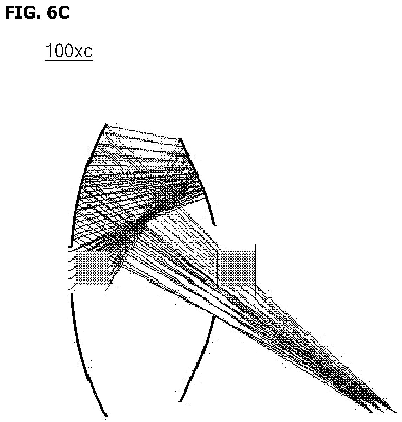

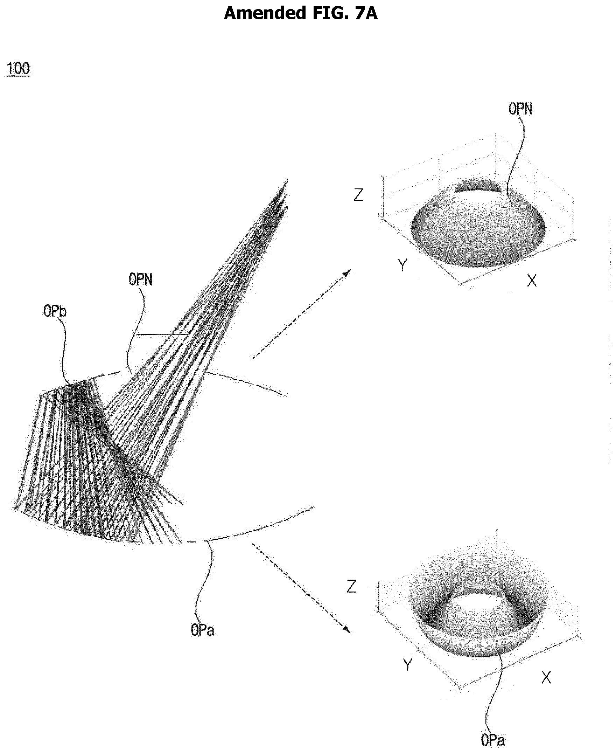

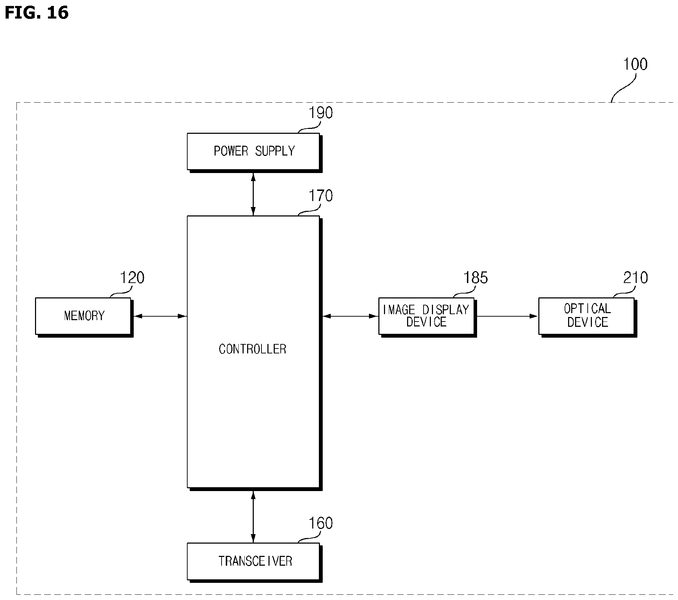

. FIG. 1A illustrates an outer appearance of a display device according to an embodiment of the present disclosure.
. FIG. 1B is a side view of the display device of FIG. 1A.
. FIG. 1C illustrates a light path in a first optical mirror and a second optical mirror of FIG. 1A.
. FIG. 1D illustrates various examples of a floating image displayed by the display device of FIG. 1A.
. FIG. 2 illustrates an outer appearance of a display device related to the present disclosure.
. FIG. 3A illustrates one example of a floating image by the display device of FIG. 2.
. FIG. 3B illustrates one example of a floating image by the display device of FIG. 1A.
. FIG. 4A illustrates another example of a floating image by the display device of FIG. 2.
. FIG. 4B illustrates another example of a floating image by the display device of FIG. 1A.
. FIG. 5A illustrates yet another example of a floating image by the display device of FIG. 2.
. FIG. 5B illustrates yet another example of a floating image by the display device of FIG. 1A.
. FIGS. 6A and 6B illustrate various examples of a display device related to the present disclosure.
. FIG. 6C is a reference diagram for explaining a display device according to an embodiment of the present disclosure.
. FIGS. 7A to 15D are reference diagrams for explaining FIG. 1A.
. FIG. 16 illustrates an example of an internal block diagram of the display device of FIG. 1A.

### DETAILED DESCRIPTION

. Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

. In the following description, a suffix such as "module" and "unit" may be used to refer to elements or components. Use of such a suffix herein is merely intended to facilitate description of the specification, and the suffix itself is not intended to give any special meaning or function.

. It will be understood that although the terms "first", "second", etc. may be used herein to describe various elements, these elements should not be limited by these terms. These terms are only used to distinguish one element from another.

. FIG. 1A illustrates an outer appearance of a display device according to an embodiment of the present disclosure, and FIG. 1B is a side view of the display device of FIG. 1A.

. Referring to the drawings, a display device 100 according to an embodiment of the present disclosure is a device configured to display a floating image IM for a viewer 10.

. Here, the floating image IM is not an image displayed on a display panel or the like, but rather it may be an image displayed in the air using an internal optical mirror (OPa, OPb).

. To this end, the display device 100 according to an embodiment of the present disclosure includes a case CSE having an opening OPN, a first optical mirror OPb disposed in a first side of the case CSE, and a second optical mirror OPa disposed in a second side of the case CSE and located below the first optical mirror OPb.

. Meanwhile, light from an object OBJ may be reflected by the first optical mirror OPb, and light from the first optical mirror OPb may be reflected by the second optical mirror OPa to thereby pass through the opening OPN.

. Meanwhile, in one embodiment, a curved surface is formed on the first optical mirror OPb in the display device 100, and a residual, which is a difference between the curved surface of the first optical mirror OPb and a parabolic surface, is asymmetric at both ends of the first optical mirror OPb. Accordingly, it is possible to improve the viewing angle when displaying the floating image IM. In addition, it is possible to reduce the size of the display device 100.

. Further, it is possible to increase the size of the floating image IM. In particular, the size of the floating image IM can be increased by using a freeform optical mirror OPb.

. Meanwhile, the first optical mirror OPb is disposed to face the object OBJ placed in the case CSE, and a distance between the second optical mirror OPa and the object OBJ is preferably less than a distance between the first optical mirror OPb and the object OBJ. Accordingly, it is possible to improve the viewing angle when displaying the floating image IM, and to reduce the size of the display device 100.

. Meanwhile, in one embodiment, a curved surface is formed on the second optical mirror OPa in the display device 100, and a second residual, which is a difference between the curved surface of the second optical mirror OPa and a second parabolic surface, is asymmetric at both ends of the second optical mirror OPa. Accordingly, it is possible to improve the viewing angle when displaying the floating image IM, and to reduce the size of the display device 100. In addition, it is possible to increase the size of the floating image IM. In particular, the size of the floating image IM can be increased by using a freeform optical mirror OPb.

. Meanwhile, the first optical mirror OPb is disposed to face the object OBJ placed in the case CSE, and a distance between the second optical mirror OPa and the object OBJ is preferably less than a distance between the first optical mirror OPb and the object OBJ. Accordingly, it is possible to improve the viewing angle when displaying the floating image IM, and to reduce the size of the display device 100.

. Meanwhile, as shown in FIG. 1B, it is preferable that the second optical mirror OPa disposed at a lower portion of the case CSE is larger in size than the first optical mirror OPb disposed at an upper portion of the case CSE. This allows the second optical mirror OPa to stably reflect light from the first optical mirror OPb toward the opening OPN.

. FIG. 1C illustrates a light path PATHa in the first optical mirror and the second optical mirror of FIG. 1A.

. Referring to the drawing, light from the object OBJ may be reflected by the first optical mirror OPb, and light from the first optical mirror OPb may be reflected by the second optical mirror OPa to thereby pass through the opening OPN. Accordingly, it is possible to improve the viewing angle when displaying the floating image IM, and to reduce the size of the display device 100.

. FIG. 1D illustrates various examples of a floating image displayed by the display device of FIG. 1A.

. Referring to the drawing, when the object OBJ is in a first position Pa, light from the object OBJ may be reflected by the first optical mirror OPb, and light from the first optical mirror OPb may be reflected by the second optical mirror OPa to thereby pass through the opening OPN.

. This allows a floating image IM to be displayed in a first space P1 between the opening OPN and the viewer 10.

. In the drawing, it is illustrated that SFa, which is a portion of the floating image IM displayed in the first space P1, is displayed.

. Meanwhile, when the object OBJ is in a second position Pb higher than the first position Pa, light from the object OBJ may be reflected by the first optical mirror OPb, and light from the first optical mirror OPb may be reflected by the second optical mirror OPa to thereby pass through the opening OPN.

. This allows a floating image IM to be displayed in a second space P2 between the opening OPN and the viewer 10. In particular, the second space P2 is closer to the viewer 10 compared to the first space P1.

. In the drawing, it is illustrated that SFb, which is a portion of the floating image IM displayed in the second space P2, is displayed.

. Meanwhile, a distance d2 between the first space P1 and the second space P2 is greater than a distance d1 between the first position Pa and the second position Pb.

. In particular, when the second position Pb is located higher than the first position Pa by a constant distance d1, the second space P2 may not be a constant distance d2 with respect to the first space P1 and may be inclined at a predetermined angle.

. As such, in the display device 100 according to one embodiment of the present disclosure, the curved surfaces of the first optical mirror OPb and the second optical mirror OPa have a freeform shape rather than a parabola, so that the angle of a floating image is adjustable according to the position of the object OBJ.

. In particular, the higher the position of the object OBJ from the height of the second optical mirror OPa, the closer the position of the floating image IM is to the viewer 10 between the opening OPN and the viewer 10, such that the angle of the floating image IM is more tilted toward the viewer 10.

. In other words, as the position of the object OBJ becomes higher than the height of the second optical mirror OPa, the angle of the floating image IM is varied, causing it to be more tilted toward the viewer 10. Accordingly, it is possible to improve the viewing angle when displaying the floating image IM.

. Meanwhile, it is preferable that the curved surface (GRb) of the first optical mirror OPb has a plurality of curvatures. Accordingly, it is possible to improve the viewing angle when displaying the floating image IM, and to reduce the size of the display device 100.

. Meanwhile, it is preferable that the curved surface of the second optical mirror OPa has a plurality of curvatures. Accordingly, it is possible to improve the viewing angle when displaying the floating image IM, and to reduce the size of the display device 100.

. Meanwhile, it is preferable that a distance between the first optical mirror OPb and the opening OPN is less than a distance between the second optical mirror OPa and the opening OPN. Accordingly, it is possible to improve the viewing angle when displaying the floating image IM, and to reduce the size of the display device 100.

. FIG. 2 illustrates an outer appearance of a display device related to the present disclosure.

. Referring to the drawing, a display device 100x related to the present disclosure may include two concave mirrors OPax and OPbx with a symmetrical parabolic optical surface, as in the case of Patent Document 2.

. A floating image IMx is displayed by two concave mirrors OPax and OPbx having a symmetrical parabolic optical surface. However, since the curved surface of the two concave mirrors OPax and OPbx corresponds to a parabola, the size of the two concave mirrors OPax and OPbx should increase as the size of an object OBJx increases, which inevitably increases the size of the display device 100x.

. In addition, as the two concave mirrors OPax and OPbx increase in size, it is more likely to have different magnifications in upper and lower parts of the floating image IMx of the object OBJx, or to cause distortion.

. Therefore, in an embodiment of the present disclosure, the curved surfaces of the first optical mirror OPb and the second optical mirror OPa in the display device 100 have a freeform shape rather than a paraboloid.

. For example, the curved surface of the first optical mirror OPb or the second optical mirror OPa may be formed as a freeform curved surface such as a Zernike polynomial or an XY polynomial. Accordingly, it is possible to reduce a magnification difference or distortion of the floating image.

. Meanwhile, in an embodiment of the present disclosure, a residual, which is a difference between the curved surface of the optical mirror in the display device 100 and a parabolic surface, is formed asymmetrically. Accordingly, it is possible to improve the viewing angle when displaying the floating image IM. In addition, it is possible to reduce the size of the display device 10.

. FIG. 3A illustrates one example of a floating image by the display device of FIG. 2.

. Referring to the drawing, a display device 100x of FIG. 3A may include an upper concave mirror OPbx and a lower concave mirror OPax, and the upper concave mirror OPbx and the lower concave mirror OPax may have a parabolic surface.

. Meanwhile, as shown in (a) of FIG. 3A, when an object OBJx is placed in L1x near the lower concave mirror OPax, a floating image IMXa may be displayed in L2x near the upper concave mirror OPbx.

. In this case, when the viewer 10 is on the right side, the object OBJx may be closer to the viewer 10 compared to the floating image IMXa.

. Meanwhile, (b) of FIG. 3A illustrates the floating image IMXa.

. FIG. 3B illustrates one example of a floating image by the display device of FIG. 1A.

. Referring to the drawing, a display device 100 of FIG. 3B may include a first optical mirror OPb and a second optical mirror OPa, and the first optical mirror OPb and the second optical mirror OPa may have a freeform curved surface rather than a parabolic surface.

. Meanwhile, as shown in (a) of FIG. 3B, when an object OBJ is placed in L1a near the second optical mirror OPa, a floating image IMa may be displayed in L2a near the first optical mirror OPb.

. In this case, when the viewer 10 is on the right side, the floating image IMa may be closer to the viewer 10 compared to the object OBJ. This allows the floating image IMa to be larger in size than that of FIG. 3A.

. Meanwhile, (b) of FIG. 3B illustrates the floating image IMa.

. When comparing the floating image IMa in (b) of FIG. 3B and the floating image IMXa in (b) of FIG. 3A, the floating image IMa in (b) of FIG. 3B exhibits a larger size.

. Meanwhile, as shown in FIG. 3B, a freeform optical mirror allows the display device 100 to have a smaller size than the display device 100x of FIG. 3A.

. Although the display device 100x of FIG. 3A and the display device 100 of FIG. 3B have the same height, a diameter of the second optical mirror OPa of the display device 100 of FIG. 3B is less than a diameter of the lower concave mirror OPax of the display device 100x of FIG. 3A.

. For example, the lower concave mirror OPax of the display device 100x of FIG. 3A may have a diameter of 560 mm, and the second optical mirror OPa of the display device 100 of FIG. 3B may have a diameter of 480 mm.

. FIG. 4A illustrates another example of a floating image by the display device of FIG. 2.

. Referring to the drawing, a display device 100x of FIG. 4A is similar to the display device 100x of FIG. 3A but is smaller in size than the display device 100x of FIG. 3A.

. For example, a lower concave mirror OPax of the display device 100x of FIG. 4A may have a diameter of 370 mm.

. FIG. 4B illustrates another example of a floating image by the display device of FIG. 1A.

. Referring to the drawing, a display device 100b of FIG. 4B is similar to the display device 100 of FIG. 3B but is smaller in size than the display device 100b of FIG. 4A.

. For example, a second optical mirror OPa of the display device 100b of FIG. 4B may have a diameter of 350 mm.

. Meanwhile, as shown in (a) of FIG. 4B, when an object OBJ is placed in L1b near the second optical mirror OPa, a floating image IMb may be displayed in L2b near a first optical mirror OPb.

. Meanwhile, when comparing a floating image IMb in (b) of FIG. 4B and a floating image IMXa in (b) of FIG. 4A, the floating image IMb in (b) of FIG. 4B exhibits a larger size.

. Meanwhile, as shown in FIG. 4B, a freeform optical mirror allows the display device 100b to have a smaller size than the display device 100x of FIG. 4A.

. Although the display device 100x of FIG. 4A and the display device 100b of FIG. 4B have the same height, the diameter of the second optical mirror OPa of the display device 100b of FIG. 4B is less than the diameter of the lower concave mirror OPax of the display device 100x of FIG. 4A.

. FIG. 5A illustrates another example of a floating image by the display device of FIG. 2.

. Referring to the drawing, a display device 100x of FIG. 5A is similar to the display device 100x of FIG. 3A but is smaller in size than the display device 100x of FIG. 3A.

. For example, a lower concave mirror OPax of the display device 100x of FIG. 5A may have a diameter of 400 mm.

. FIG. 5B illustrates another example of a floating image by the display device of FIG. 1A.

. Referring to the drawing, a display device 100c of FIG. 5B is similar to the display device 100 of FIG. 3B but is smaller in size than the display device 100c of FIG. 5A.

. For example, a second optical mirror OPa of the display device 100c of FIG. 5B may have a diameter of 380 mm.

. Meanwhile, as shown in (a) of FIG. 5B, when an object OBJ is placed in L1c near the second optical mirror OPa, a floating image IMc may be displayed in L2c near a first optical mirror OPc.

. Meanwhile, when comparing a floating image IMc in (c) of FIG. 5B and a floating image IMXa in (c) of FIG. 5A, the floating image IMc in (c) of FIG. 5B exhibits a larger size.

. Meanwhile, as shown in FIG. 5B, a freeform optical mirror allows the display device 100c to have a smaller size than the display device 100x of FIG. 5A.

. Although the display device 100x of FIG. 5A and the display device 100c of FIG. 5B have the same height, the diameter of the second optical mirror OPa of the display device 100c of FIG. 5B is less than the diameter of the lower concave mirror OPax of the display device 100x of FIG. 5A.

. Meanwhile, when comparing FIG. 5A and FIG. 5B, the display device 100x of FIG. 5A has a limitation on the size of an object (OBJx) due to a size constraint or the like, whereas the display device 100c of FIG. 5B can display a floating image using an object (OBJ) of a larger size than that of FIG. 5A.

. FIGS. 6A and 6B illustrate various examples of a display device related to the present disclosure.

. Referring to the drawings, a display device 100xa of FIG. 6A may include two concave mirrors with a parabolic surface, and a lower concave mirror may have a diameter of about 1370 mm or less.

. A display device 100xb of FIG. 6B may include two concave mirrors with a parabolic surface, and a lower concave mirror may have a diameter of about 1600 mm or less.

. Referring to the drawings, the display device 100xb of FIG. 6B is disadvantageous in that it is larger in size than that of FIG. 6A and light output to an Arx area in the vicinity of an upper concave mirror is blocked.

. FIG. 6C is a reference diagram for explaining a display device according to an embodiment of the present disclosure.

. Referring to the drawing, a display device 100 of FIG. 6C includes a first optical mirror OPb and a second optical mirror OPa having a freeform curved surface, rather than a parabolic surface.

. In this case, the second optical mirror OPa may have a diameter of about 1230 mm or less.

. Compared to the display devices 100xa and 100xb of FIGS. 6A and 6B, the diameter may be significantly reduced, thereby reducing the size of the display device 100.

. FIGS. 7A to 15D are reference diagrams for explaining FIG. 1A.

. FIG. 7A is a detailed diagram illustrating a curved surface of the first optical mirror OPb and a curved surface of the second optical mirror OPa of the display device 100 of FIG. 1A.

. The curved surface of the first optical mirror OPb and the curved surface of the second optical mirror OPa may each be a freeform curved surface rather than a parabolic surface.

. For example, the curved surface of the first optical mirror OPb and the curved surface of the second optical mirror OPa may be formed as a freeform curved surface such as a Zernike polynomial or an XY polynomial.

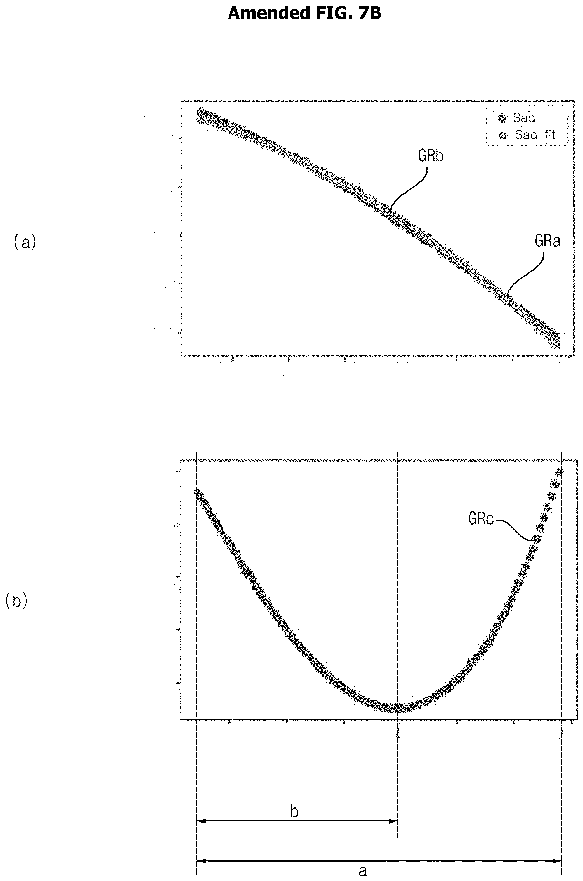

. FIG. 7B is a reference diagram for explaining a residual (GRc), which is a difference between a curved surface (GRb) of the first optical mirror OPb and a parabolic surface (Gra).

. First, (a) of FIG. 7B illustrates a curved surface GRb of the first optical mirror OPb and a parabolic surface GRa.

. Here, the viewer 10 or the opening OPN may be on the left of a horizontal axis of (a) of FIG. 7B.

. Next, (b) of FIG. 7B illustrates a residual GRc, which is a difference between the curved surface GRb of the first optical mirror OPb and the parabolic surface GRa.

. Referring to the drawing, the viewer 10 or the opening OPN may be on the left of a horizontal axis of (b) of FIG. 7B.

. Both ends of the horizontal axis of (b) of FIG. 7B may correspond to both ends of the first optical mirror OPb.

. Referring to (b) of FIG. 7B, the residual GRc, which is the difference between the curved surface GRb of the first optical mirror OPb and the parabolic surface GRa, is asymmetric at both ends of the first optical mirror OPb.

. Meanwhile, the residual GRc increases from a center of the residual GRc, at which the difference between the curved surface GRb of the first optical mirror OPb and the parabolic surface Gra is the lowest, to both ends of the first optical mirror OPb, and, of the both ends, the residual GRc at a second end is preferably greater than the residual GRc at a first end.

. In this case, the first end of the first optical mirror OPb corresponds to the left end of (b) of FIG. 7B, and the second end of the first optical mirror OPb corresponds to the right end of (b) of FIG. 7B.

. Accordingly, it is possible to improve the viewing angle when displaying the floating image IM, and to reduce the size of the display device 100.

. Meanwhile, it is preferable that, of both ends of the first optical mirror OPb, the residual GRc at a second end farther away from the opening OPN is greater than the residual GRc at a first end closer to the opening OPN.

. In this case, the first end closer to the opening OPN corresponds to the left end of (b) of FIG. 7B, and the second end farther away from the opening OPN corresponds to the right end of (b) of FIG. 7B.

. Accordingly, it is possible to improve the viewing angle when displaying the floating image IM, and to reduce the size of the display device 100.

. Meanwhile, when a ratio of a first distance b between the center of the residual GRc (which is the lowest level or point of the residual GRc) and the first end of the first optical mirror OPb to a distance a between the first end and the second end of the first optical mirror OPb is less than 0.5, it becomes too concave from a center of the first optical mirror OPb to the second end of the first optical mirror OPb and approaches a parabolic shape. Consequently, the usable area of the second optical mirror OPa for a light ray running from the top surface of a 3D object OBJ is decreased, which causes a reduced image.

. By contrast, when the ratio of the first distance b between the center of the residual GRc (which is the lowest level or point of the residual GRc) and the first end of the first optical mirror OPb to the distance a between the first end and the second end of the first optical mirror OPb is greater than 0.65, it becomes too concave from the opening OPN to the center of the first optical mirror OPb and approaches a parabolic shape. Consequently, the usable area of the second optical mirror OPa for a light ray originating from the top surface of a 3D object OBJ is decreased, which causes a reduced image.

. Therefore, in order to prevent an image reduction of the 3D object OBJ, the ratio of the first distance b between the center of the residual GRc (at which the difference between the curved surface GRb of the first optical mirror OPb and the parabolic surface Gra is the lowest) and the first end of the first optical mirror OPb to the distance a between the first end and the second end of the first optical mirror OPb is preferably 0.5 to 0.65. Thus, it is possible to improve the viewing angle when displaying the floating image IM, and to reduce the size of the display device 100.

. Meanwhile, the curved surface GRb of the first optical mirror OPb may be flat relative to the parabolic surface GRa. Accordingly, it is possible to improve the viewing angle when displaying the floating image IM, and to reduce the size of the display device 100.

. Meanwhile, in FIGS. 7A and 7B, a description has been made based on the curved surface of the first optical mirror OPb, but this can be equally applied to the curved surface of the second optical mirror OPa.

. Meanwhile, a curved surface is formed on the second optical mirror OPa, and a second residual GRc, which is a difference between the curved surface of the second optical mirror OPa and a second parabolic surface GRa, is asymmetric at both ends of the second optical mirror OPa. Accordingly, it is possible to improve the viewing angle when displaying the floating image IM, and to reduce the size of the display device 100.

. Meanwhile, the second residual GRc increases from a center of the second residual GRc, at which the difference between the curved surface of the second optical mirror OPa and the second parabolic surface Gra is the lowest, to both ends of the second optical mirror OPa, and, of the both ends, the residual GRc at a fourth end is preferably greater than the residual GRc at a third end. Accordingly, it is possible to improve the viewing angle when displaying the floating image IM, and to reduce the size of the display device 100.

. Meanwhile, it is preferable that, of both ends of the second optical mirror OPa, the residual GRc at a fourth end farther away from the opening OPN is greater than the residual GRc at a third end closer to the opening OPN. Accordingly, it is possible to improve the viewing angle when displaying the floating image IM, and to reduce the size of the display device 100.

. Meanwhile, when a ratio of a first distance b between the center of the second residual GRc (which is the lowest level or point of the second residual GRc) and the third end of the second optical mirror OPa to a distance a between the third end and the fourth end of the second optical mirror OPa is less than 0.5, it becomes too concave from a center of the second optical mirror OPa to the fourth end of the of the second optical mirror OPa and approaches a parabolic shape. Consequently, a part of a light ray running from the top surface of a 3D object OBJ is cut off at the first optical mirror OPb, which leads to a decrease in usable area to thereby cause a reduced image.

. By contrast, when the ratio of the first distance b between the center of the second residual GRc (which is the lowest level or point of the second residual GRc) and the third end of the second optical mirror OPa to the distance a between the third end and the fourth end of the second optical mirror OPa is greater than 0.65, it becomes too concave from the opening OPN to the center of the second optical mirror OPa and approaches a parabolic shape. Consequently, a part of a light ray originating from the top surface of a 3D object OBJ is cut off at the first optical mirror OPb, which leads to a decrease in usable area to thereby cause a reduced image.

. Therefore, in order to prevent an image reduction of the 3D object OBJ, the ratio of the first distance b between the center of the second residual GRc (at which the difference between the curved surface of the second optical mirror OPa and the second parabolic surface Gra is the lowest) and the third end of the second optical mirror OPa to the distance a between the third end and the fourth end of the second optical mirror OPa is preferably 0.5 to 0.65. Thus, it is possible to improve the viewing angle when displaying the floating image IM, and to reduce the size of the display device 100.

. Meanwhile, the curved surface of the second optical mirror OPa may be concave relative to the parabolic surface GRa. Accordingly, it is possible to improve the viewing angle when displaying the floating image IM, and to reduce the size of the display device 100.

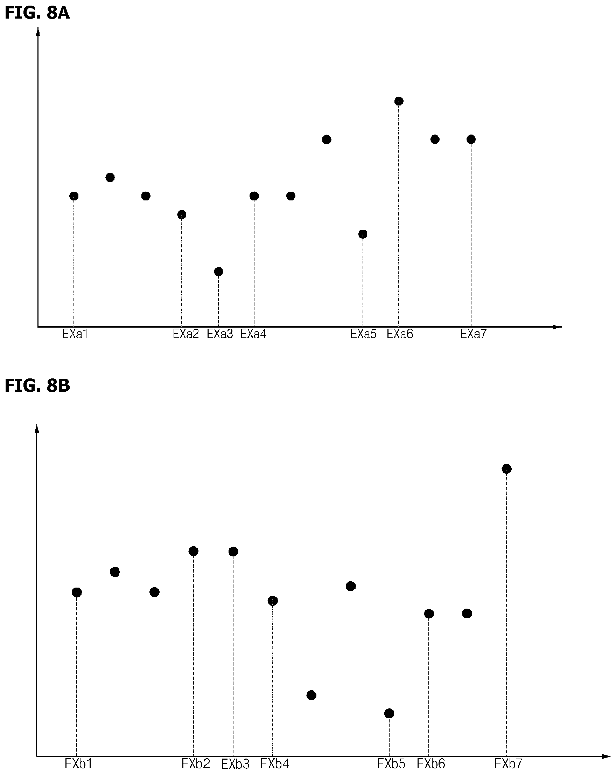

. FIG. 8A illustrates examples of various first optical mirrors OPb having a ratio of first distance b to distance a of between 0.5 and 0.65.

. Referring to the drawing, a ratio of the first distance b to the distance a of Example 1 (Exa1) may be 0.57, a ratio of the first distance b to the distance a of Example 2 (Exa2) may be 0.56, a ratio of the first distance b to the distance a of Example 3 (Exa3) may be 0.53, a ratio of the first distance b to the distance a of Example 4 (Exa4) may be 0.57, a ratio of the first distance b to the distance a of Example 5 (Exa5) may be 0.55, a ratio of the first distance b to the distance a of Example 6 (Exa6) may be 0.62, and a ratio of the first distance b to the distance a of Example 7 (Exa7) may be 0.60.

. By using the curved surface of the first optical mirror OPb, it is possible to improve the viewing angle when displaying the floating image IM, and to reduce the size of the display device 100.

. FIG. 8B illustrates examples of various second optical mirrors OPa having a ratio of first distance b to distance a of between 0.5 and 0.65.

. Referring to the drawing, a ratio of the first distance b to the distance a of Example 1 (Exb1) may be 0.58, a ratio of the first distance b to the distance a of Example 2 (Exb2) may be 0.60, a ratio of the first distance b to the distance a of Example 3 (Exb3) may be 0.60, a ratio of the first distance b to the distance a of Example 4 (Exb4) may be 0.58, a ratio of the first distance b to the distance a of Example 5 (Exb5) may be 0.52, a ratio of the first distance b to the distance a of Example 6 (Exb6) may be 0.57, and a ratio of the first distance b to the distance a of Example 7 (Exb7) may be 0.64.

. By using the curved surface of the second optical mirror OPa, it is possible to improve the viewing angle when displaying the floating image IM, and to reduce the size of the display device 100.

. Meanwhile, when the absolute value of a ratio of a curvature of the first optical mirror OPb to a curvature of the second optical mirror OPa is less than 0.75, the size of a floating image becomes too small, and a ray originating from the bottom surface of a 3D object OBJ is partially cut off in the direction of the viewer 10 to the first optical mirror OPb, making it difficult to implement a floating image.

. By contrast, when the absolute value of the ratio of the curvature of the first optical mirror OPb to the curvature of the second optical mirror OPa is greater than 1.25, a ray originating from the top surface of a 3D object OBJ is partially cut off in the opposite direction of the viewer 10 to the first optical mirror OPb, making it difficult to implement a floating image.

. Therefore, the absolute value of the ratio of the curvature of the first optical mirror OPb to the curvature of the second optical mirror OPa is preferably 0.75 to 1.25. Thus, it is possible to improve the viewing angle when displaying the floating image IM. In addition, it is possible to reduce the size of the display device 100.

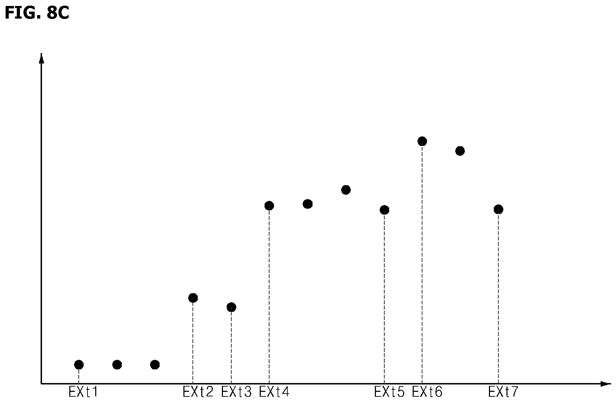

. FIG. 8C illustrating various examples of the absolute value of a ratio of a curvature of the first optical mirror OPb to a curvature of the second optical mirror OPa.

. Referring to the drawing, a ratio of the curvature of the first optical mirror OPb to the curvature of the second optical mirror OPa of Example 1 (Ext1) may be -1.26, a ratio of the curvature of the first optical mirror OPb to the curvature of the second optical mirror of Example 2 (Ext2) may be -1.10, a ratio of the curvature of the first optical mirror OPb to the curvature of the second optical mirror OPa of Example 3 (Ext3) may be -1.12, a ratio of the curvature of the first optical mirror OPb to the curvature of the second optical mirror OPa of Example 4 (Ext4) may be -0.89, a ratio of the curvature of the first optical mirror OPb to the curvature of the second optical mirror OPa of Example 5 (Ext5) may be -0.90, a ratio of the curvature of the first optical mirror OPb to the curvature of the second optical mirror OPa of Example 6 (Ext6) may be -0.74, and a ratio of the curvature of the first optical mirror OPb to the curvature of the second optical mirror OPa of Example 7 (Ext7) may be -0.90.

. Accordingly, it is possible to improve the viewing angle when displaying the floating image IM, and to reduce the size of the display device 100.

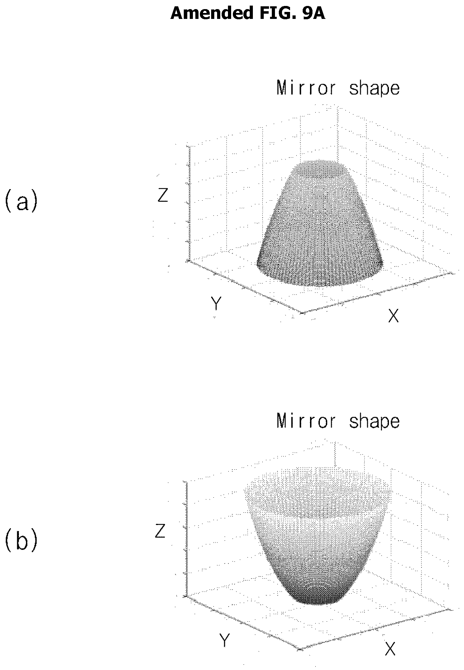

. (a) of FIG. 9A illustrates a first optical mirror OPb corresponding to Example 1 (EXa1) of FIG. 8A, and (b) of FIG. 9A illustrates a second optical mirror OPa corresponding to Example 1 (EXb1) of FIG. 8B.

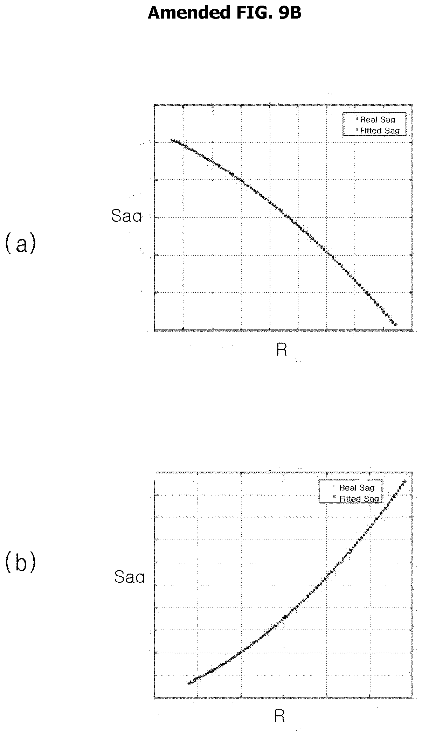

. (a) of FIG. 9B illustrates a curved surface of the first optical mirror OPb corresponding to Example 1 (EXa1) of FIG. 8A, and (b) of FIG. 9B illustrates a curved surface of the second optical mirror OPa corresponding to Example 1 (EXb1) of FIG. 8B.

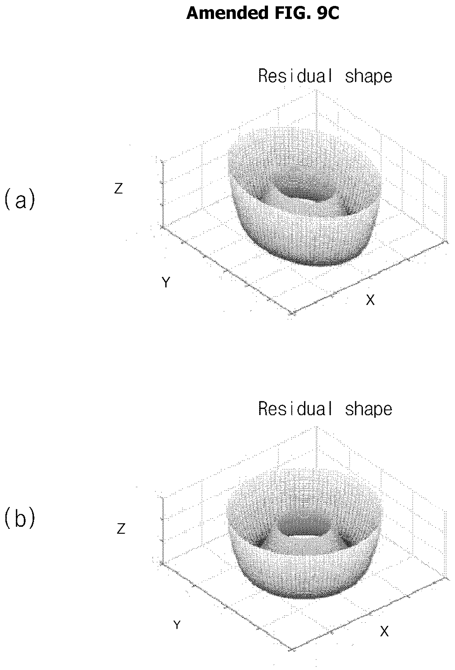

. (a) of FIG. 9C illustrates a residual shape of the first optical mirror OPb corresponding to Example 1 (EXa1) of FIG. 8A, and (b) of FIG. 9C illustrates a residual shape of the second optical mirror OPa corresponding to Example 1 (EXb1) of FIG. 8B.

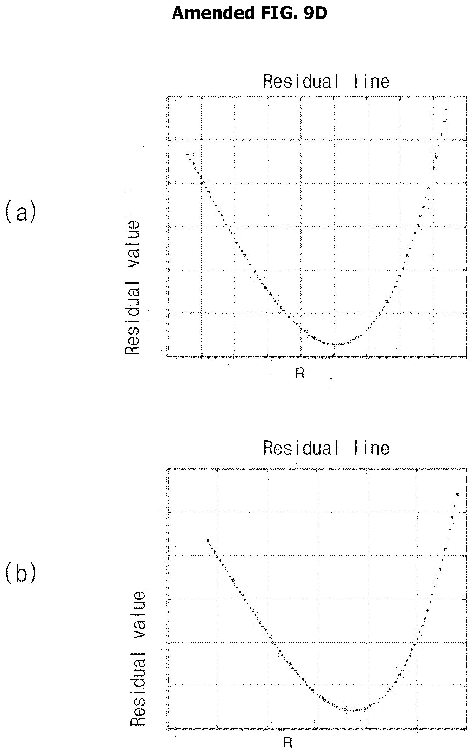

. (a) of FIG. 9D illustrates a residual graph of the first optical mirror OPb corresponding to Example 1 (EXa1) of FIG. 8A, and (b) of FIG. 9D illustrates a residual graph of the second optical mirror OPa corresponding to Example 1 (EXb1) of FIG. 8B.

. Referring to FIG. 9D, a residual GRc, which is a difference between a curved surface GRb of the first optical mirror OPb and a parabolic surface GRa, is asymmetric at both ends of the first optical mirror OPb.

. In addition, a second residual, which is a difference between a curved surface of the second optical mirror OPa and a second parabolic surface, is asymmetric at both ends of the second optical mirror OPa. Accordingly, it is possible to improve the viewing angle when displaying the floating image IM. In addition, it is possible to reduce the size of the display device 100.

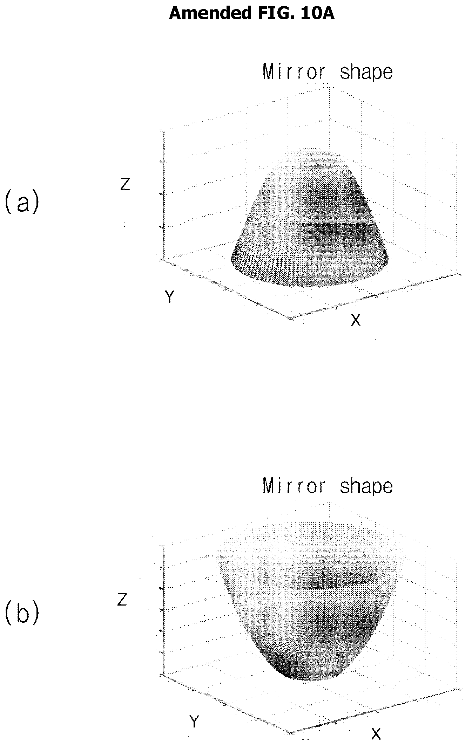

. (a) of FIG. 10A illustrates a first optical mirror OPb corresponding to Example 2 (EXa2) of FIG. 8A, and (b) of FIG. 10A illustrates a second optical mirror OPa corresponding to Example 2 (EXb2) of FIG. 8B.

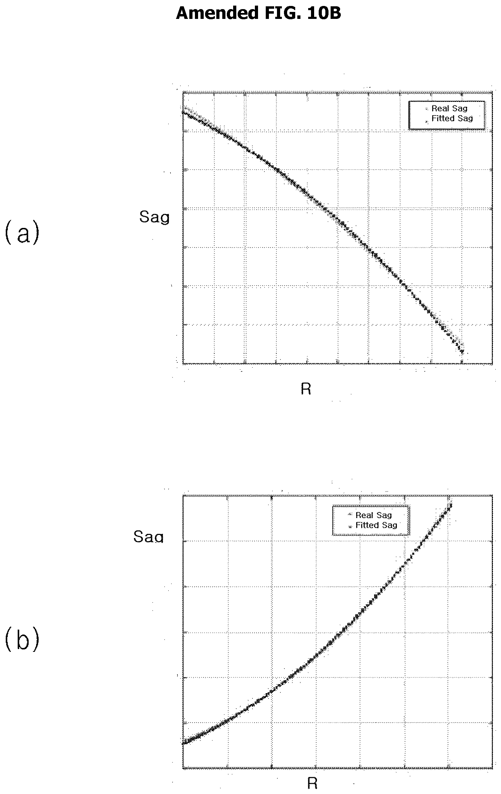

. (a) of FIG. 10B illustrates a curved surface of the first optical mirror OPb corresponding to Example 2 (EXa2) of FIG. 8A, and (b) of FIG. 10B illustrates a curved surface of the second optical mirror OPa corresponding to Example 2 (EXb2) of FIG. 8B.

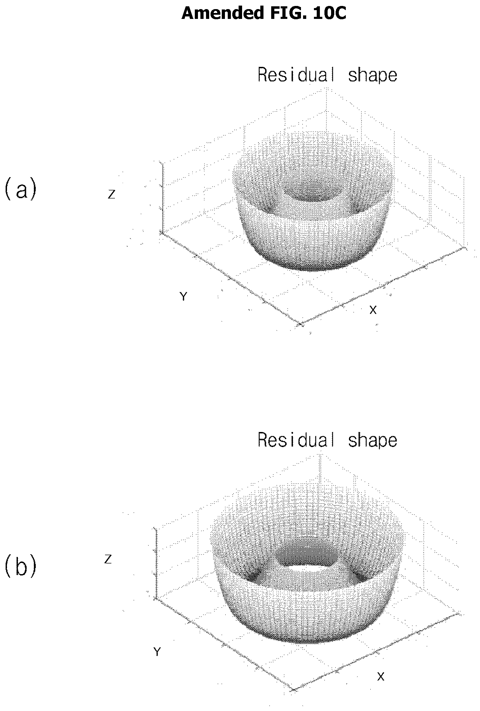

. (a) of FIG. 10C illustrates a residual shape of the first optical mirror OPb corresponding to Example 2 (EXa2) of FIG. 8A, and (b) of FIG. 10C illustrates a residual shape of the second optical mirror OPa corresponding to Example 2 (EXb2) of FIG. 8B.

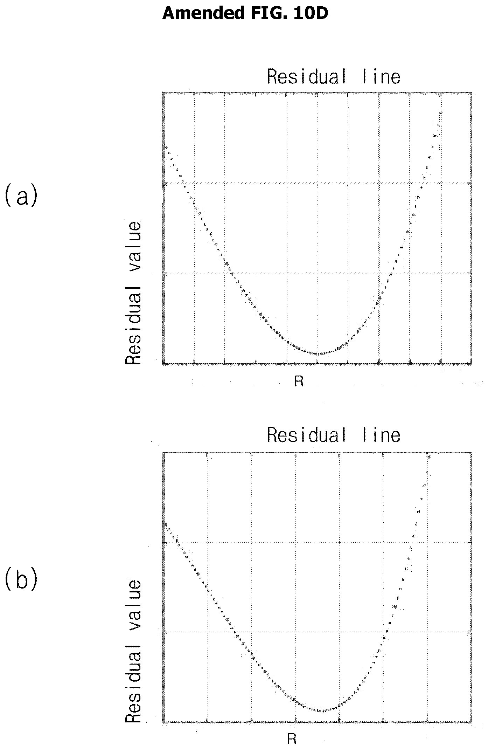

. (a) of FIG. 10D illustrates a residual graph of the first optical mirror OPb corresponding to Example 2 (EXa2) of FIG. 8A, and (b) of FIG. 10D illustrates a residual graph of the second optical mirror OPa corresponding to Example 2 (EXb2) of FIG. 8B.

. Referring to FIG. 10D, a residual GRc, which is a difference between a curved surface GRb of the first optical mirror OPb and a parabolic surface GRa, is asymmetric at both ends of the first optical mirror OPb.

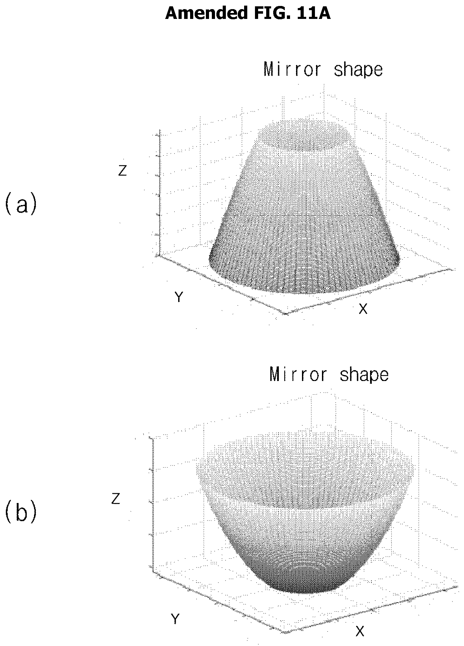

. (a) of FIG. 11A illustrates a first optical mirror OPb corresponding to Example 3 (EXa3) of FIG. 8A, and (b) of FIG. 11A illustrates a second optical mirror OPa corresponding to Example 3 (EXb3) of FIG. 8B.

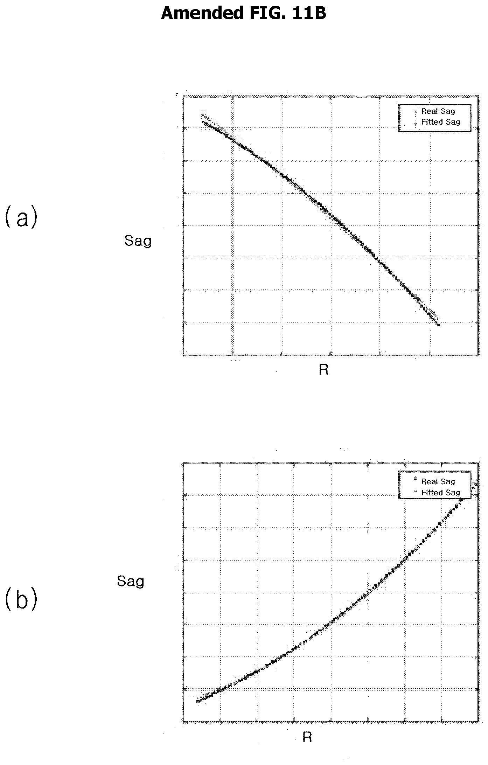

. (a) of FIG. 11B illustrates a curved surface of the first optical mirror OPb corresponding to Example 3 (EXa3) of FIG. 8A, and (b) of FIG. 11B illustrates a curved surface of the second optical mirror OPa corresponding to Example 3 (EXb3) of FIG. 8B.

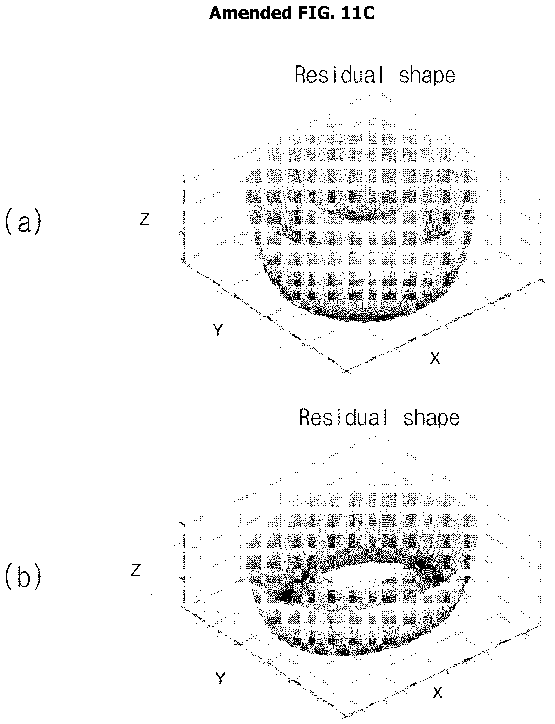

. (a) of FIG. 11C illustrates a residual shape of the first optical mirror OPb corresponding to Example 3 (EXa3) of FIG. 8A, and (b) of FIG. 11C illustrates a residual shape of the second optical mirror OPa corresponding to Example 3 (EXb3) of FIG. 8B.

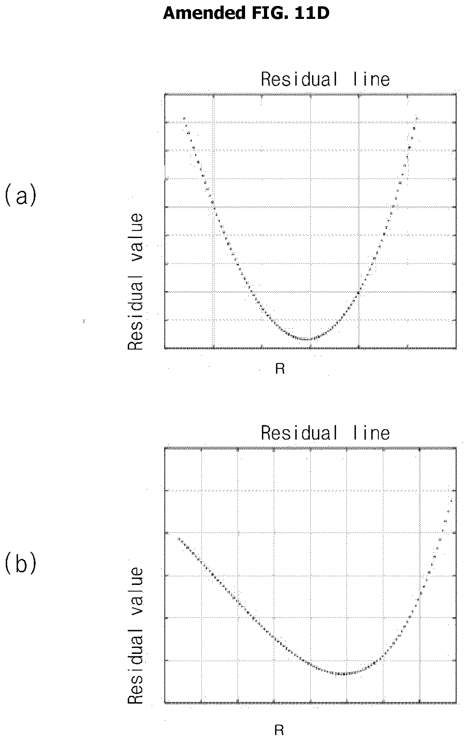

. (a) of FIG. 11D illustrates a residual graph of the first optical mirror OPb corresponding to Example 3 (EXa3) of FIG. 8A, and (b) of FIG. 11D illustrates a residual graph of the second optical mirror OPa corresponding to Example 3 (EXb3) of FIG. 8B.

. Referring to FIG. 11D, a residual GRc, which is a difference between a curved surface GRb of the first optical mirror OPb and a parabolic surface GRa, is asymmetric at both ends of the first optical mirror OPb.

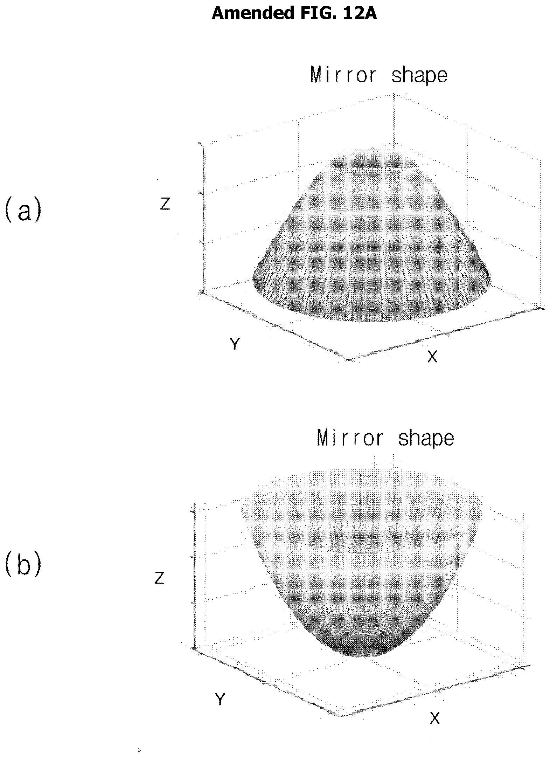

. (a) of FIG. 12A illustrates a first optical mirror OPb corresponding to Example 4 (EXa4) of FIG. 8A, and (b) of FIG. 12A illustrates a second optical mirror OPa corresponding to Example 4 (EXb4) of FIG. 8B.

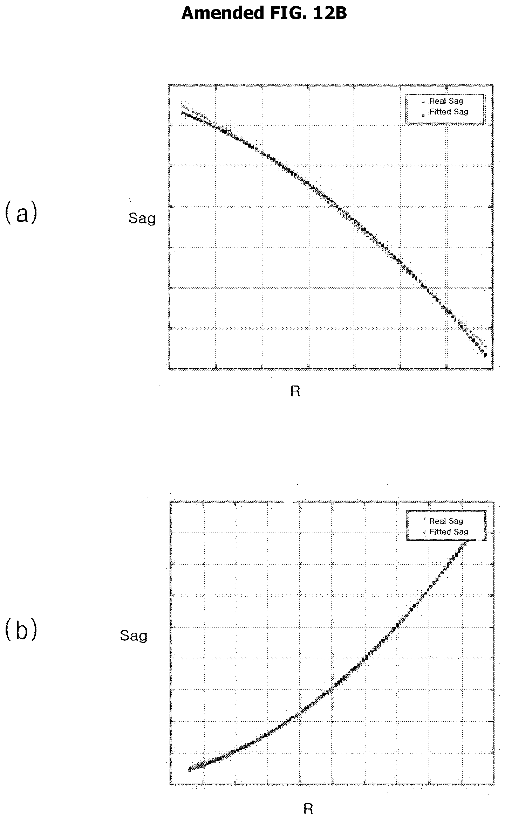

. (a) of FIG. 12B illustrates a curved surface of the first optical mirror OPb corresponding to Example 4 (EXa4) of FIG. 8A, and (b) of FIG. 12B illustrates a curved surface of the second optical mirror OPa corresponding to Example 4 (EXb4) of FIG. 8B.

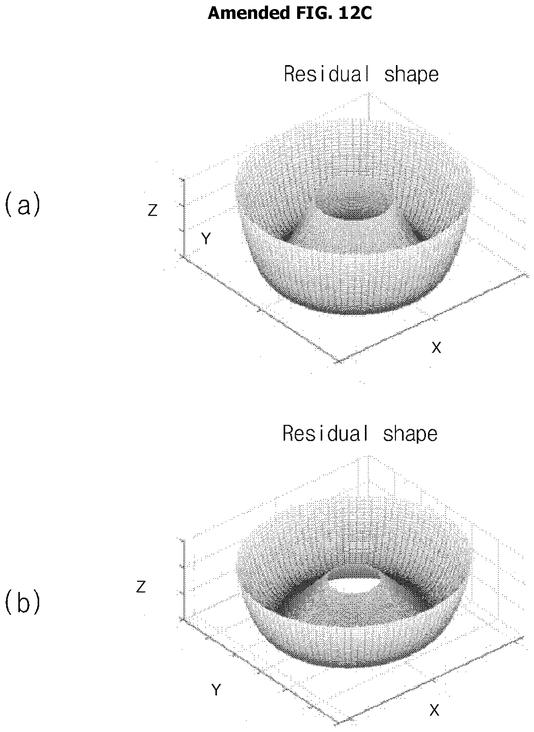

. (a) of FIG. 12C illustrates a residual shape of the first optical mirror OPb corresponding to Example 4 (EXa4) of FIG. 8A, and (b) of FIG. 12C illustrates a residual shape of the second optical mirror OPa corresponding to of Example 4 (EXb4) of FIG 8B.

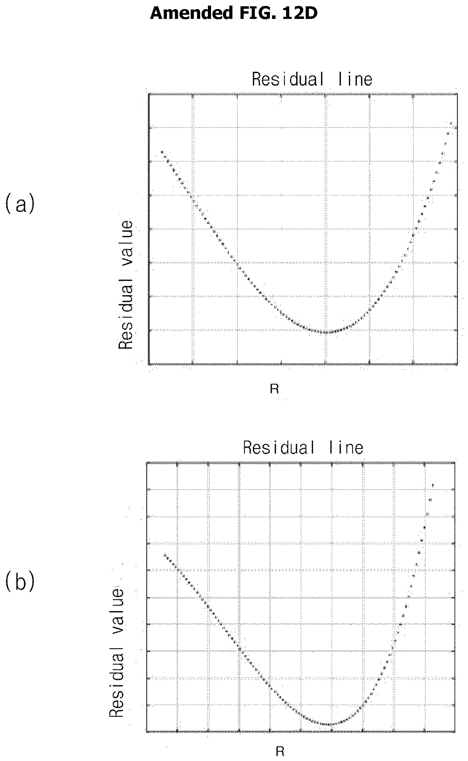

. (a) of FIG. 12D illustrates a residual graph of the first optical mirror OPb corresponding to Example 4 (EXa4) of FIG. 8A, and (b) of FIG. 12D illustrates a residual graph of the second optical mirror OPa corresponding to Example 4 (EXb4) of FIG. 8B.

. Referring to FIG. 12D, a residual GRc, which is a difference between a curved surface GRb of the first optical mirror OPb and a parabolic surface GRa, is asymmetric at both ends of the first optical mirror OPb.

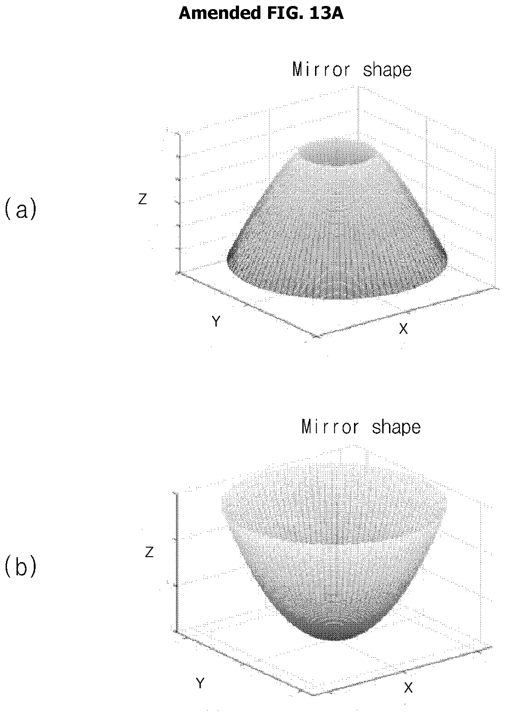

. (a) of FIG. 13A illustrates a first optical mirror OPb corresponding to Example 5 (EXa5) of FIG. 8A, and (b) of FIG. 13A illustrates a second optical mirror OPa corresponding to Example 5 (EXb5) of FIG. 8B.

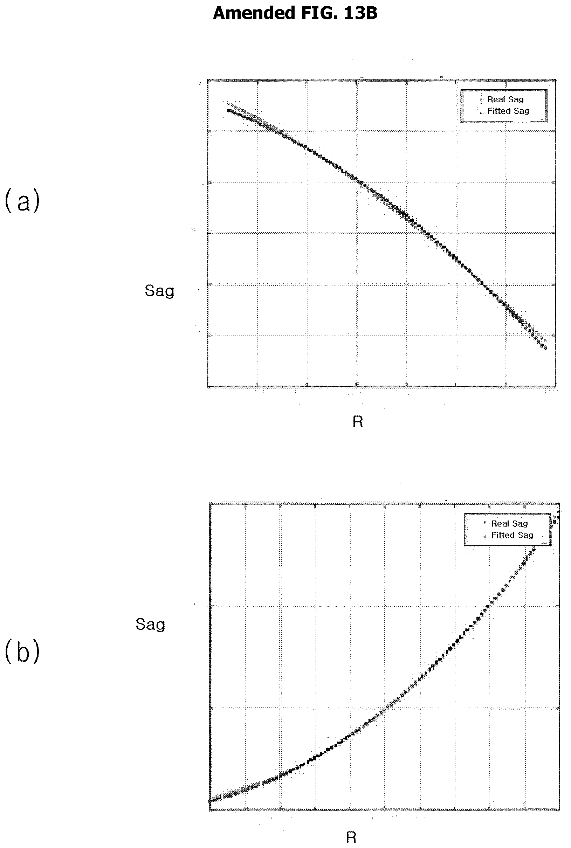

. (a) of FIG. 13B illustrates a curved surface of the first optical mirror OPb corresponding to Example 5 (EXa5) of FIG. 8A, and (b) of FIG. 13B illustrates a curved surface of the second optical mirror OPa corresponding to Example 5 (EXb5) of FIG. 8B.

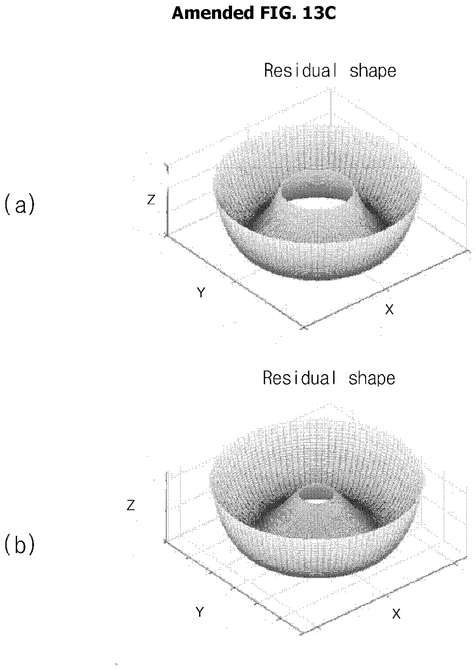

. (a) of FIG. 13C illustrates a residual shape of the first optical mirror OPb corresponding to Example 5 (EXa5) of FIG. 8A, and (b) of FIG. 13C illustrates a residual shape of the second optical mirror OPa corresponding to Example 5 (EXb5) of FIG. 8B.

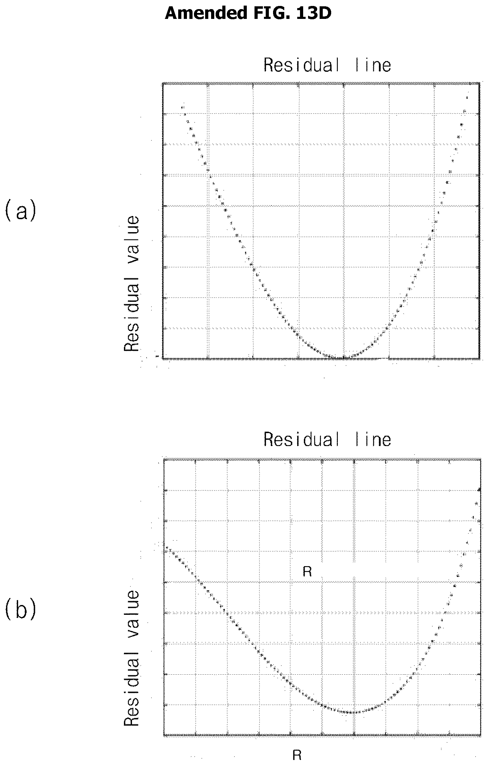

. (a) of FIG. 13D illustrates a residual graph of the first optical mirror OPb corresponding to Example 5 (EXa5) of FIG. 8A, and (b) of FIG. 13D illustrates a residual graph of the second optical mirror OPa corresponding to Example 5 (EXb5) of FIG. 8B.

. Referring to FIG. 13D, a residual GRc, which is a difference between a curved surface GRb of the first optical mirror OPb and a parabolic surface GRa, is asymmetric at both ends of the first optical mirror OPb.

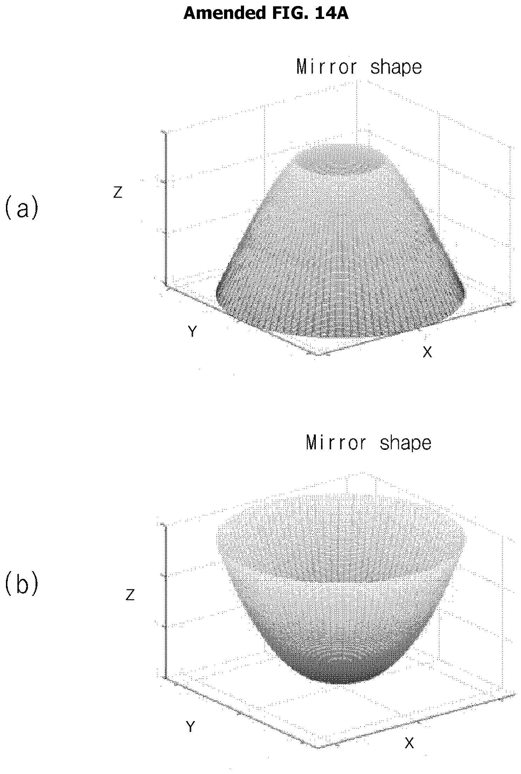

. (a) of FIG. 14A illustrates a first optical mirror OPb corresponding to Example 6 (EXa6) of FIG. 8A, and (b) of FIG. 14A illustrates a second optical mirror OPa corresponding to Example 6 (EXb6) of FIG. 8B.

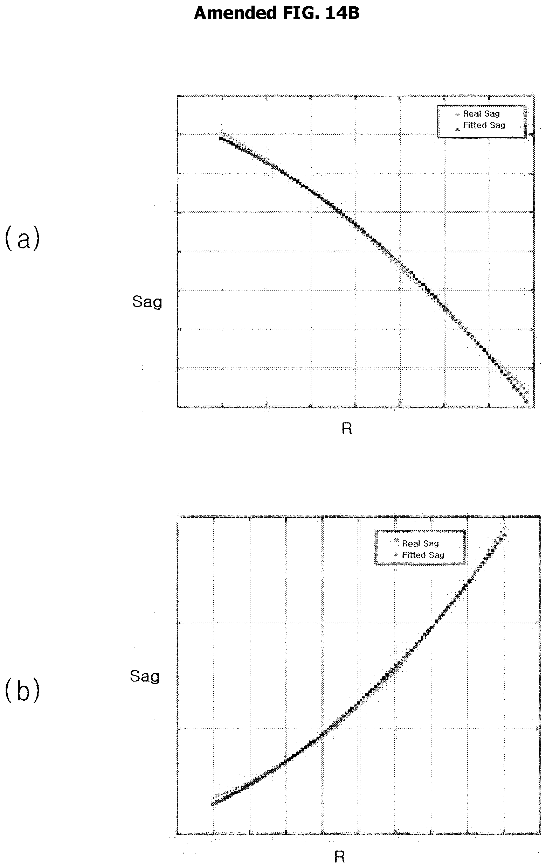

. (a) of FIG. 14B illustrates a curved surface of the first optical mirror OPb corresponding to Example 6 (EXa6) of FIG. 8A, and (b) of FIG. 14B illustrates a curved surface of the second optical mirror OPa corresponding to Example 6 (EXb6) of FIG. 8B.

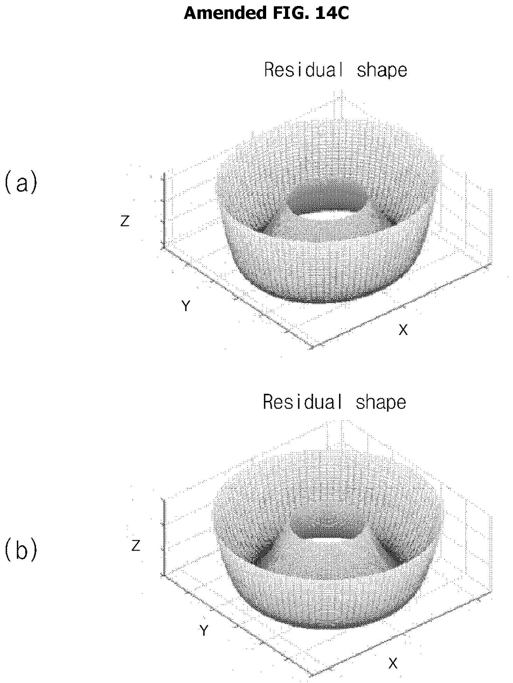

. (a) of FIG. 14C illustrates a residual shape of the first optical mirror OPb corresponding to Example 6 (EXa6) of FIG. 8A, and (b) of FIG. 14C illustrates a residual shape of the second optical mirror OPa corresponding to Example 6 (EXb6) of FIG. 8B.

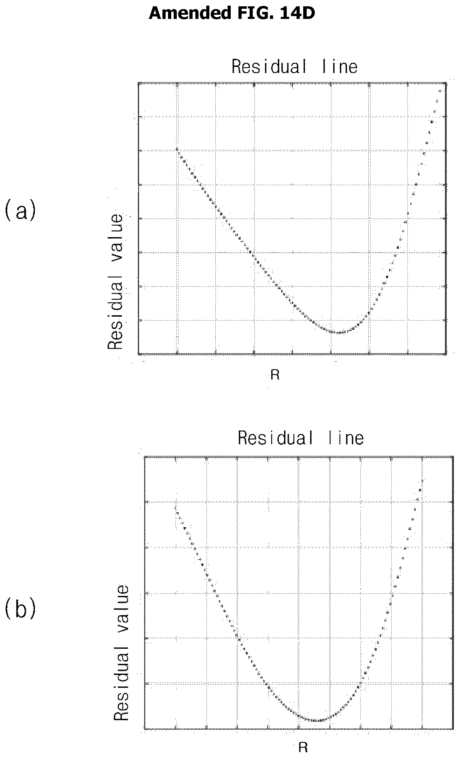

. (a) of FIG. 14D illustrates a residual graph of the first optical mirror OPb corresponding to Example 6 (EXa6) of FIG. 8A, and (b) of FIG. 14D illustrates a residual graph of the second optical mirror OPa corresponding to Example 6 (EXb6) of FIG. 8B.

. Referring to FIG. 14D, a residual GRc, which is a difference between a curved surface GRb of the first optical mirror OPb and a parabolic surface GRa, is asymmetric at both ends of the first optical mirror OPb.

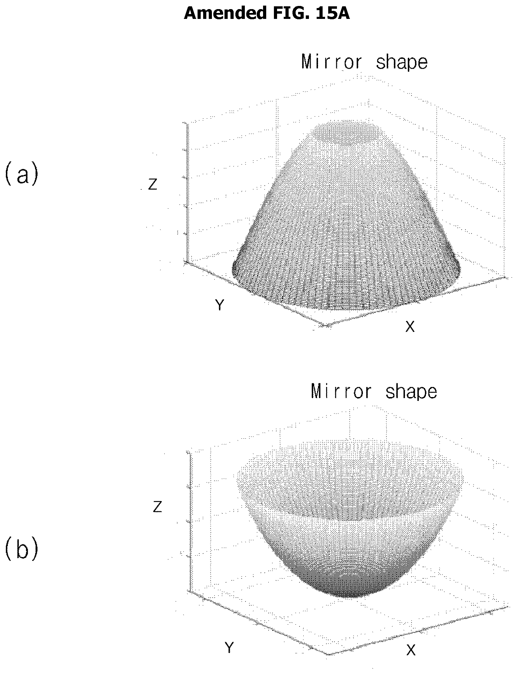

. (a) of FIG. 15A illustrates a first optical mirror OPb corresponding to Example 7 (EXa7) of FIG. 8A, and (b) of FIG. 15A illustrates a second optical mirror OPa corresponding to Example 7 (EXb7) of FIG. 8B.

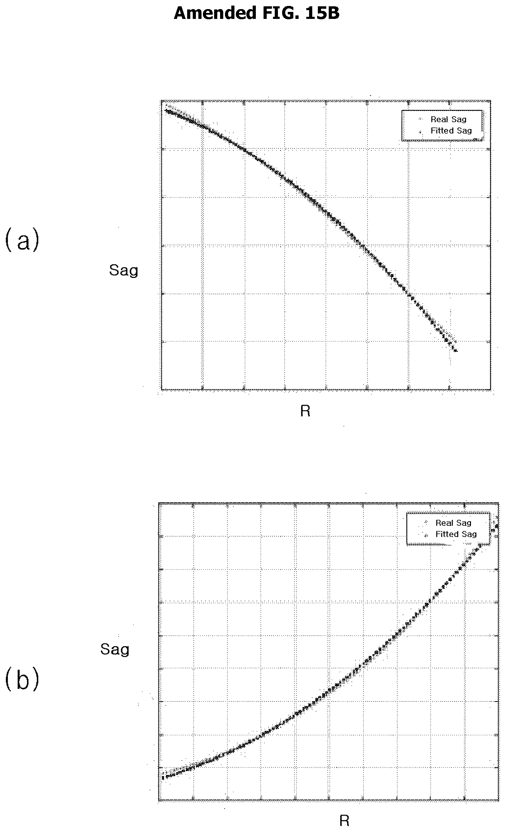

. (a) of FIG. 15B illustrates a curved surface of the first optical mirror OPb corresponding to Example 7 (EXa7) of FIG. 8A, and (b) of FIG. 15B illustrates a curved surface of the second optical mirror OPa corresponding to Example 7 (EXb7) of FIG. 8B.

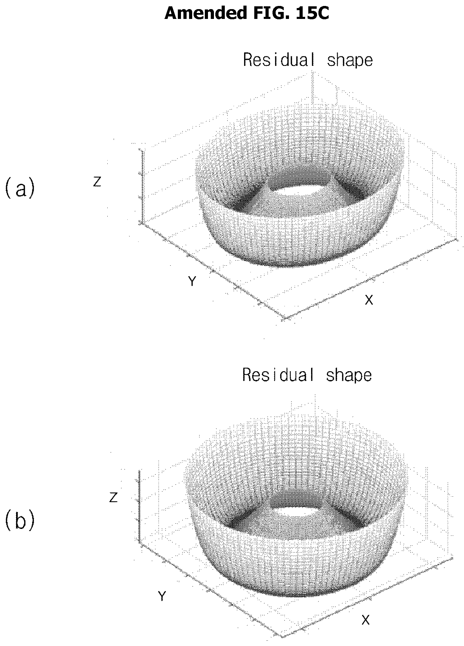

. (a) of FIG. 15C illustrates a residual shape of the first optical mirror OPb corresponding to Example 7 (EXa7) of FIG. 8A, and (b) of FIG. 15C illustrates a residual shape of the second optical mirror OPa corresponding to Example 7 (EXb7) of FIG. 8B.

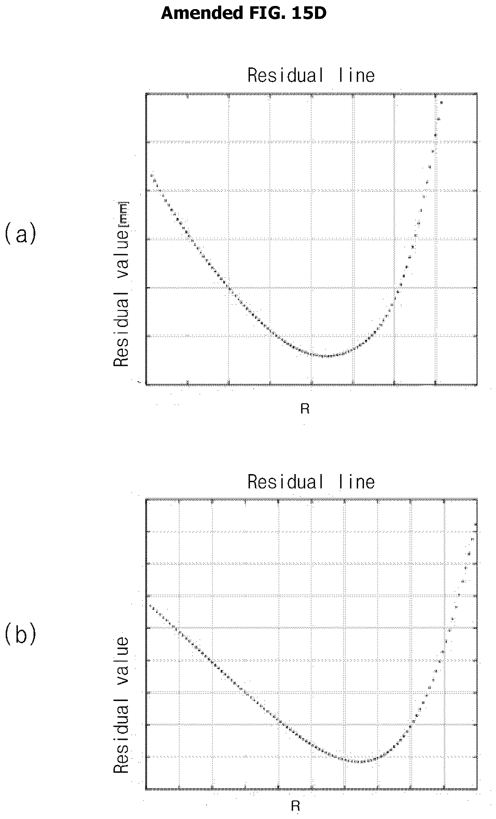

. (a) of FIG. 15D illustrates a residual graph of the first optical mirror OPb corresponding to Example 7 (EXa7) of FIG. 8A, and (b) of FIG. 15D illustrates a residual graph of the second optical mirror OPa corresponding to Example 7 (EXb7) of FIG. 8B.

. Referring to FIG. 15D, a residual GRc, which is a difference between a curved surface GRb of the first optical mirror OPb and a parabolic surface GRa, is asymmetric at both ends of the first optical mirror OPb.

. FIG. 16 illustrates an example of an internal block diagram of the display device of FIG. 1A.

. Referring to the drawing, the display device 100 according to an embodiment of the present disclosure may include a memory 120, a controller 170, a transceiver 160, an image display device 185, an optical device 210, a power supply 190, and the like.

. Meanwhile, the optical device 210 may include the aforementioned first optical mirror OPb and the second optical mirror OPa.

. Meanwhile, the image display device 185 may include various display panels such as LCD, OLED, and LED, thereby allowing a predetermined image to be displayed through the display panel.

. The optical device 210 may allow a predetermined image displayed on the image display device 185 to be formed in the air.

. The memory 120 may store programs for processing and control by the controller 170, or may perform a function for temporarily storing input or output data (e.g., still images, moving images (or video), and the like).

. The transceiver 135 serves as an interface with all external devices or networks that are wired or wirelessly connected to the display device 100. The transceiver 135 may receive data or images from these external devices or may receive power to transmit it to each component in the display device 100, and may allow data in the display device 100 to be transmitted to the external devices.

. In particular, the transceiver 135 may receive a radio signal from an adjacent mobile terminal (not shown). Here, the radio signal may include various types of data such as a voice call signal, a video call signal, text data, video data, and the like.

. To this end, the transceiver 135 may include a short-range transceiver (not shown). Bluetooth, Radio Frequency Identification (RFID), Infrared Data Association (IrDA), Ultra-Wideband (UWB), ZigBee, Near Field Communication (NFC), or the like may be used as a short-range communication technology.

. The controller 170 may perform the overall control operation of the display device 100. Specifically, the controller 170 may control the operation of each unit in the display device 100.

. The controller 170 may control a video image stored in the memory 120 or a video image received from an external device through the transceiver 135 to be output as an output image.

. In particular, the controller 170 may control the image display device 185 to output a predetermined image. Specifically, a R, G, B signal corresponding to a video image to be displayed may be output to the image display device 185. Accordingly, the image display device 185 may display a predetermined image.

. The power supply 190 may receive external power or internal power under the control of the controller 170 so as to supply power required for the operation of each of the components.

. The power supply 190 supplies power throughout the display device 100. In particular, the power supply 190 supplies power to the controller 170, which may be implemented as a system on chip (SOC), the image display device 185 for displaying an image, and an audio output device (not shown) for outputting audio.

. It will be apparent that, although the preferred embodiments have been shown and described above, the present disclosure is not limited to the above-described specific embodiments, and various modifications and variations can be made by those skilled in the art without departing from the scope of the present disclosure as defined by the appended claims. Thus, it is intended that the modifications and variations should not be understood independently of the technical idea or perspective of the present disclosure.

## Claims

1. A display device comprising:
a case in which an opening is formed;
a first optical mirror disposed in a first side of the case; and
a second optical mirror disposed in a second side of the case, the second optical mirror being located below the first optical mirror,
wherein a curved surface is formed on the first optical mirror, and
wherein a residual, which is a difference between the curved surface of the first optical mirror and a parabolic surface, is asymmetric at both ends of the first optical mirror.

2. The display device of claim 1, wherein the residual increases from a center of the residual, at which the difference between the curved surface of the first optical mirror and the parabolic surface is lowest, to the both ends of the first optical mirror, and a residual at a second end of the of the both ends is greater than a residual at a first end of the both ends.

3. The display device of claim 1, wherein, of the both ends of the first optical mirror, a residual at a second end farther away from the opening is greater than a residual at a first end closer to the opening.

4. The display device of claim 1, wherein a ratio of a first distance between a center of the residual at which the difference between the curved surface of the first optical mirror and the parabolic surface is lowest and a first end of the first optical mirror to a distance between the first end and a second end of the first optical mirror is 0.5 to 0.65.

5. The display device of claim 1, wherein a curved surface is formed on the second optical mirror, and
wherein a second residual, which is a difference between the curved surface of the second optical mirror and a second parabolic surface, is asymmetric at both ends of the second optical mirror.

6. The display device of claim 5, wherein the second residual increases from a center of the second residual, at which the difference between the curved surface of the second optical mirror and the second parabolic surface is lowest, to the both ends of the second optical mirror, and a residual at a fourth end of the both ends is greater than a residual at a third end of the both ends.

7. The display device of claim 5, wherein, of the both ends of the second optical mirror, a residual at a fourth end farther away from the opening is greater than a residual at a third end closer to the opening.

8. The display device of claim 5, wherein a ratio of a first distance between a center of the second residual at which the difference between the curved surface of the second optical mirror and the second parabolic surface is lowest and a third end of the second optical mirror to a distance between the third end and a fourth end of the second optical mirror is 0.5 to 0.65.

9. The display device of claim 1, wherein an absolute value of a ratio of a curvature of the first optical mirror to a curvature of the second optical mirror is 0.75 to 1.25.

10. The display device of claim 1, wherein the curved surface of the first optical mirror has a plurality of curvatures.

11. The display device of claim 1, wherein a curved surface of the second optical mirror has a plurality of curvatures.

12. The display device of claim 1, wherein a distance between the first optical mirror and the opening is less than a distance between the second optical mirror and the opening.

13. The display device of claim 1, wherein the first optical mirror is disposed to face an object placed in the case, and
wherein a distance between the second optical mirror and the object is less than a distance between the first optical mirror and the object.

14. The display device of claim 13, wherein light from the object is reflected by the first optical mirror, and light from the first optical mirror is reflected by the second optical mirror to thereby pass through the opening.

15. A display device comprising:
a case in which an opening is formed;
a first optical mirror disposed in a first side of the case; and
a second optical mirror disposed in a second side of the case, the second optical mirror being located below the first optical mirror,
wherein a curved surface is formed on the second optical mirror, and
wherein a second residual, which is a difference between the curved surface of the second optical mirror and a second parabolic surface, is asymmetric at both ends of the second optical mirror.

16. The display device of claim 15, wherein the second residual increases from a center of the second residual, at which the difference between the curved surface of the second optical mirror and the second parabolic surface is lowest, to the both ends of the second optical mirror, and a residual at a fourth end of the both ends is greater than a residual at a third end of the both ends.

17. The display device of claim 15, wherein, of the both ends of the second optical mirror, a residual at a fourth end farther away from the opening is greater than a residual at a third end closer to the opening.

18. The display device of claim 15, wherein a ratio of a first distance between a center of the second residual at which the difference between the curved surface of the second optical mirror and the second parabolic surface is lowest and a third end of the second optical mirror to a distance between the third end and a fourth end of the second optical mirror is 0.5 to 0.65.
